(19) Europäisches Patentamt / European Patent Office / Office européen des brevets

(11) **EP 1 825 653 B1**

(12) **FASCICULE DE BREVET EUROPEEN**

(45) Date de publication et mention de la délivrance du brevet:
**08.06.2011 Bulletin 2011/23**

(21) Numéro de dépôt: **05822917.0**

(22) Date de dépôt: **28.11.2005**

(51) Int Cl.:
*H04L 29/06* *(2006.01)*  *H04L 12/18* *(2006.01)*

(86) Numéro de dépôt international:
**PCT/FR2005/002954**

(87) Numéro de publication internationale:
**WO 2006/067287 (29.06.2006 Gazette 2006/26)**

(54) **PROCEDE DE DIFFUSION MULTICAST VERS AU MOINS UN TERMINAL UTILISATEUR NOMADE D'UN RESEAU IP MOBILE**

SYSTEM ZUM MULTICAST-BROADCASTING ZU MINDESTENS EINEM ROAMENDEN BENUTZERENDGERÄT IN EINEM MOBIL-IP-NETZWERK

SYSTEM FOR MULTICAST BROADCASTING TOWARDS AT LEAST ONE ROAMING USER TERMINAL IN A MOBILE IP NETWORK

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **17.12.2004 FR 0413524**

(43) Date de publication de la demande:
**29.08.2007 Bulletin 2007/35**

(73) Titulaire: **FRANCE TELECOM
75015 Paris (FR)**

(72) Inventeurs:
• **NOISETTE, Yoann
F-14320 MAYS SUR ORNE (FR)**
• **BELOEIL, Luc
F-14440 DOUVRES LA DELIVRANDE (FR)**
• **AUVRAY, Sébastien
F-SW1W 9RP LONDON (FR)**

(74) Mandataire: **Loisel, Bertrand et al
Cabinet Plasseraud
52 rue de la Victoire
75440 Paris Cedex 09 (FR)**

(56) Documents cités:
**WO-A-00/79734    US-A1- 2003 095 523
US-B1- 6 741 575**

• **PATENT ABSTRACTS OF JAPAN vol. 2003, no. 12, 5 décembre 2003 (2003-12-05) & JP 2004 260317 A (NIPPON TELEGR & TELEPH CORP <NTT>), 16 septembre 2004 (2004-09-16)**

**Description**

L'invention concerne un procédé de diffusion, vers des terminaux utilisateurs nomades d'un réseau IP mobile, d'une diffusion Multicast locale à leur site d'origine.

Le procédé, objet de l'invention, est destiné à être mise en oeuvre au bénéfice de toute entité, éventuellement multisites, équipée d'un réseau de télécommunications constitué, au moins pour partie, de réseaux IP mobiles.

Une telle entité peut, par exemple, correspondre à une société d'exploitation de transports en commun, dont les véhicules, autobus, tramway, trains, voire véhicules particuliers, sont équipés de terminaux nomades mobiles susceptibles d'être connectés à partir d'un endroit quelconque au réseau IP. Une telle entité est en outre considérée pouvoir disposer de ressources de diffusion Multicast IP.

Le réseau d'opérateurs auquel cette entité ou entreprise, qui peut être une entreprise multisites, est un réseau IP permettant la mise en oeuvre le processus de diffusion Multicast.

En référence à la recommandation RFC 2365, on rappelle qu'il existe trois types de diffusion Multicast.

Pour tout terminal nomade utilisateur appartenant et référencé sur un site d'origine, les types de diffusion Multicast précitées recouvrent:

- les diffusions privées au site d'origine, encore désignées diffusions locales au site, lesquelles sont effectuées uniquement à destination des utilisateurs originaires et référencés dans ce site d'origine. Ces diffusion ne passent en aucun cas d'un site à un autre site appartenant à la même organisation;
- les diffusions privées à l'organisation d'origine, typiquement privées ou locales à l'entité ou entreprise, encore désignées diffusions locales à l'organisation. Ces diffusions ne passent en aucun cas à l'extérieur de l'organisation d'origine;
- les diffusions globales. Ces diffusions peuvent être diffusées sur le réseau IP public, en particulier sur l'Internet.

Les différents types de diffusion Multicast précitées impliquent une contrainte très forte sur les restrictions d'accès, encore désignées conditions d'abonnement, de tout terminal nomade, appartenant à un site et à une organisation d'origine, en fonction de l'endroit où ce dernier se connecte au réseau IP.

La présente invention a pour objet de définir et établir un procédé permettant à tout terminal nomade utilisateur, référencé sur un site d'origine, d'accéder, ou de s'abonner, automatiquement à la diffusion désirée en fonction de la position du réseau IP mobile, vis-à-vis de l'organisation et/ou du site d'origine, auquel ce terminal nomade est effectivement connecté.

Le procédé selon l'invention a également pour objet la mise en oeuvre des processus diffusion Multicast IP et Nemo pour *Networks in Mobility* en anglais, ce processus reposant sur la technologie Mobile IP, les réseaux IP mobiles de l'entité ou entreprise mettant en oeuvre la technologie Nemo.

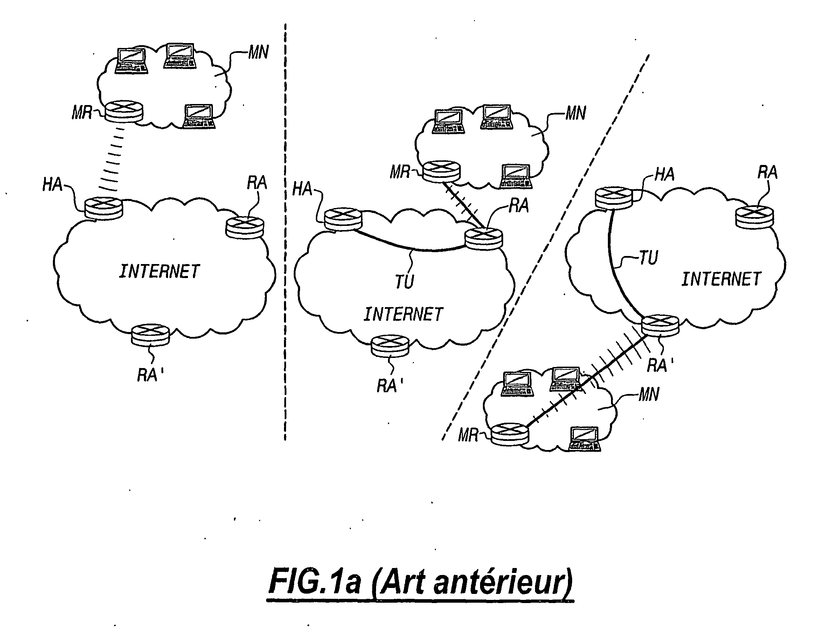

Relativement à la technologie Nemo, les rappels ci-après sont introduits, en référence à la figure 1a.

La technologie précitée traite de l'accès à des réseaux IP de terminaux nomades dont la mobilité se traduit par un changement du point d'attachement ou de connexion à l'Internet.

De telles situations d'accès peuvent typiquement se rencontrer pour toute installation embarquée, en particulier dans le domaine des transports, par trains ou avions. Dans le cadre de la technologie Nemo, les équipements et ressources constituant ce réseau dans cette configuration d'accès sont considérés comme un ensemble dont la connexion à l'Internet est réalisée grâce à au moins un équipement appelé routeur mobile MR pour *Mobile Routeur* en anglais.

L'un des présupposés fondamentaux de la technologie Nemo est que le type de réseau ainsi formé, dans le contexte de ces conditions d'accès, est toujours un réseau dit "feuille" ou réseau terminal, c'est-à-dire un réseau qui, en aucun cas, n'assume la fonction de transit de trafic entre deux autres réseaux auxquels ce dernier serait raccordé.

Une telle règle méconnaît toutefois le fait qu'un tel réseau mobile présente, le plus souvent, plusieurs points de connexion à l'Internet, soit au travers d'un routeur mobile ayant plusieurs interfaces raccordées, par le biais de bornes d'accès radio de technologie différente par exemple, soit au travers de plusieurs routeurs mobiles distincts.

En référence à la figure 1a, dans le cas d'un réseau mobile contenant un certain nombre de terminaux nomades connectés tel qu'un train relié et connecté à l'internet par liaison radio, cette liaison est modifiée lors du déplacement du train. Le point d'attachement ou de connexion du train à l'Internet change successivement, entraînant au niveau IP une modification de la configuration du sous-réseau auquel le routeur mobile MR est connecté. La technologie Nemo permet de gérer ce changement et de rendre ce dernier transparent pour les terminaux nomades mobiles connectés à ce réseau mobile afin que les communications et transactions en cours, notamment avec l'extérieur, soient maintenues.

Concrètement, la technologie Nemo établit un tunnel de communication TU entre le routeur mobile MR du réseau mobile, constitué par le train et les terminaux nomades véhiculés par ce dernier, et le site au point d'attachement d'origine HA, encore désigné *Home Agent* en anglais, dans le cadre de la technologie Nemo, ce tunnel de communication étant mis en oeuvre, si nécessaire, par l'intermédiaire d'un point d'attachement intermédiaire RA utilisé successivement par le routeur mobile MR pour maintenir les communications et transactions. Dans l'exemple de la figure 1a, le point d'attachement d'origine HA peut être localisé à la gare d'origine du train. Le tunnel de communication est donc successivement modifié au fur et à mesure que le réseau mobile se déplace et, en particulier change de point d'attachement RA, RA'.

La mobilité du réseau mobile est gérée par le routeur mobile MR et donc totalement transparente pour les terminaux nomades appartenant au réseau mobile. Les communications et transactions exécutées par ces derniers continuent malgré leur déplacement comme si ces terminaux nomades étaient localisés et connectés sur leur site d'origine.

En particulier, pour ce qui concerne la gestion des flux Multicast, les terminaux nomades transmettent leur requête normalement au routeur mobile MR et les flux Multicast précités transitent par le tunnel courant entre le routeur mobile MR et son site au point d'attachement d'origine HA.

Le mode opératoire précité de la technologie Nemo permet d'assurer l'accès aux diffusions locales au site d'origine des terminaux nomades appartenant au réseau mobile. Ils ne tirent toutefois pas pleinement avantage de la fonction Multicast puisque le trafic des communications et transactions n'emprunte aucunement un arbre de diffusion Multicast, mais au contraire autant de tunnels successifs que de positions relatives du routeur mobile MR vis-à-vis des points d'attachements intermédiaires d'accès du réseau Internet.

Différents développements ont été envisagés en vue de proposer une amélioration de la diffusion Multicast dans le cadre de la technologie Nemo.

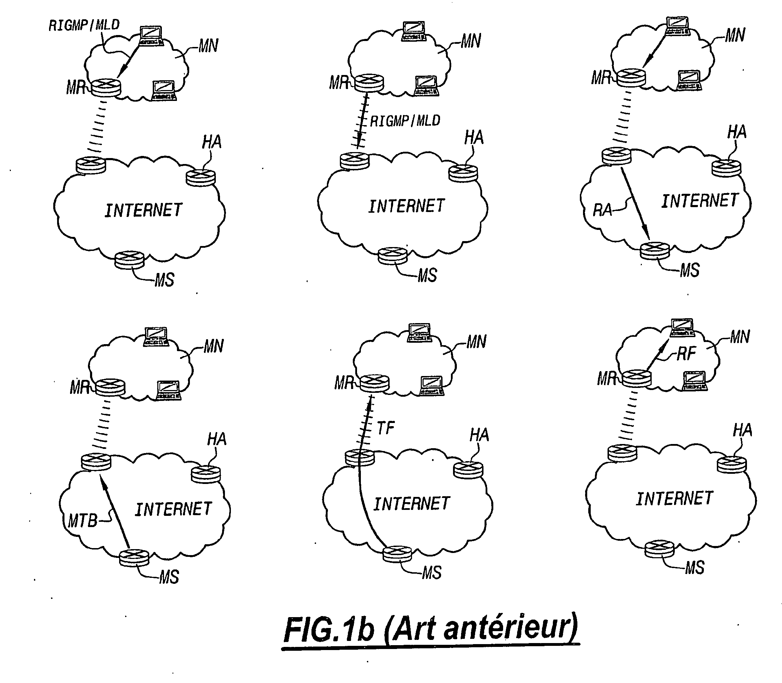

Un premier développement a été proposé par la société Motorola en vue d'améliorer le mode opératoire de la technologie Nemo, d'une part, et de fournir les flux Multicast à des terminaux nomades dans un réseau IP mobile, d'autre part. La solution préconisée par ce développement, ainsi qu'illustré en figure 1b, consiste à mettre en place une fonction de proxy MLD/IGMP au niveau du routeur mobile MR, comme cela est décrit, pour les routeurs fixes, dans la spécification IGMP-PROXY disponible sur le site Internet http://www.ietf.org/ internet-drafts/draft-ietf-magma-igmp-proxy-04.txt. Un terminal du réseau mobile accède au routeur mobile MR et au réseau Internet par une requête RIG MP/MLD.

La solution précitée permet au routeur mobile MR de collecter les informations d'appartenance à un groupe Multicast au sein du réseau IP mobile pour ensuite accéder ou s'abonner à ces groupes en son nom propre, sous sa propre adresse IP, auprès du réseau auquel est raccordé. Pour cette dernière étape, le routeur mobile MR se comporte et agit alors comme le ferait un noeud mobile formé par un terminal mobile ou fixe d'un réseau mobile MN dans un réseau visité.

Cette solution a été expérimentée dans le cadre du projet OVERDRIVE sur une couche IPv6 LIVSIX, dont les éléments techniques peuvent être consultés aux adresses des sites Internet http://www.ist-overdrive.org et http://www.nal.motlabs.com respectivement, et rendue publique lors d'une conférence tenue à Turin, Italie, en décembre 2003 dont les compte rendus peuvent être consultés à l'adresse Internet http://www.comnets.rwth-aachen.de/~o drive/HyWiN2003/index.html. Elle permet en définitive de s'affranchir de la création du tunnel de communication entre le routeur mobile MR et le point d'attachement d'origine HA, par accès direct à la Source Multicast MS pour les diffusions Multicast publiques, auxquelles les terminaux mobiles du réseau IP mobile souhaitent accéder ou s'abonner.

Un deuxième développement dans un contexte semblable a fait l'objet d'un dépôt, le 12 décembre 2003, d'une demande de brevet français FR 03 14639 au nom de la demanderesse et intitulée "Procédé et système de diffusion Multicast vers un terminal nomade en fonction de sa localisation".

L'objet de ce deuxième développement est de définir le mode opératoire nécessaire à l'association d'un processus de localisation d'un terminal nomade itinérant, connecté à un réseau fixe quelconque, d'une part, et d'une méthode d'accès ou d'abonnement à une diffusion Multicast limitée à un site, sur lequel ce terminal nomade itinérant n'est pas connecté, d'autre part.

Ce développement s'applique uniquement à un terminal nomade itinérant unique qui doit prendre en compte sa propre localisation, afin de mener à bien son protocole d'accès ou d'abonnement.

En référence à la demande de brevet FR 0314639 précitée, on rappelle les éléments essentiels du procédé mis en oeuvre par ce deuxième développement.

Lorsque le terminal nomade se connecte sur un réseau, un processus de localisation de cette connexion est activé automatiquement afin de discriminer et de savoir par l'intermédiaire d'une variable de localisation si le terminal nomade considéré est connecté soit sur son réseau ou site d'origine, soit sur un autre site de son organisation d'origine ou encore sur un site hors de son organisation d'origine, sur l'Internet public.

Sur requête par le terminal nomade d'un accès ou abonnement à un groupe de diffusion Multicast dont l'adresse est G, le procédé gère l'accès demandé à partir de l'adresse G.

Si l'adresse G est une adresse de diffusion Multicast globale, le terminal nomade connecté transmet normalement sa requête d'accès ou d'abonnement à l'adresse G sur son lieu d'accès.

Si l'adresse G est une adresse de diffusion locale à son organisation d'origine, le terminal prend en compte la valeur de la variable de localisation:

- si le terminal nomade se trouve connecté sur un réseau de son organisation d'origine, il transmet normalement sa requête d'accès ou d'abonnement à l'adresse G;

- si le terminal nomade se trouve connecté sur un réseau extérieur à son organisation d'origine, le terminal nomade lance le processus d'accès ou d'abonnement à une diffusion Multicast locale à son organisation d'origine et contacte la machine de son site d'origine gérant les abonnements des terminaux nomades en déplacement, laquelle lui retransmet, par la suite, une autre adresse publique G2 de groupe de diffusion Multicast globale, fournissant l'accès ou abonnement demandé. Le terminal nomade transmet une requête IGMP avec l'adresse publique G2.

Si l'adresse G est une adresse de diffusion Multicast locale à son site d'origine, le terminal prend en compte la valeur de la variable de localisation :

- si le terminal nomade se trouve connecté sur un réseau appartenant à son site d'origine, il transmet normalement sa requête d'accès ou d'abonnement à l'adresse G ;
- si le terminal nomade se trouve connecté sur un réseau d'un autre site appartenant à son organisation d'origine ou n'appartenant pas à son organisation d'origine, le terminal nomade lance le processus sui généris d'accès ou d'abonnement à une diffusion Multicast locale à son organisation d'origine désigné diffusion Multicast étendue et contacte la machine de son site d'origine gérant les abonnements des terminaux nomades en déplacement, laquelle lui retransmet, par la suite, une autre adresse publique G2 de groupe de diffusion Multicast globale, fournissant l'accès ou abonnement demandé. Le terminal nomade transmet une requête IGMP avec l'adresse publique G2.

Le premier et le deuxième développement précédemment décrits présentent les inconvénients ci-après, consécutifs à des problèmes techniques non résolus.

L'inconvénient du traitement par défaut du flux Multicast par la technologie Nemo provient du fait que tout flux Multicast emprunte le tunnel de communication entre le point d'attachement d'origine HA et le routeur mobile MR, sans tirer aucunement bénéfice de la possibilité de construire un arbre de diffusion Multicast sur le réseau auquel le routeur mobile MR est raccordé.

Le premier développement précité apporte une première réponse, laquelle permet de se ramener à la construction d'un véritable arbre de diffusion Multicast pour la diffusion des flux à destination des terminaux d'un réseau IP mobile, solution particulièrement bien adaptée pour les flux Multicast en diffusion globale.

La limitation de la solution proposée par ce premier développement apparaît dès lors que les diffusions Multicast ont une portée réduite, typiquement lorsqu'il s'agit de diffusions privées au site d'origine ou à l'organisation d'origine, c'est-à-dire finalement au sein et sur le réseau d'entreprise. La diffusion Multicast ne peut être effectuée en tant que telle par l'intermédiaire du premier développement précité, lequel n'est pas adapté pour les diffusions privées.

La seule possibilité, dans cette situation, reste donc d'exécuter la diffusion Multicast privée selon le traitement par défaut de la technologie Nemo, soit par l'intermédiaire du tunnel de communication reliant le routeur mobile MR au point d'attachement d'origine HA et, en conséquence, en l'absence des possibilités fournies par le mode de diffusion Multicast.

L'inconvénient du deuxième développement précité objet de la demande de brevet FR 03 14639 ne résulte pas d'un défaut technique de ce dernier mais uniquement de la solution à une problématique technique différente. En effet, dans ce deuxième développement, les éléments mis en oeuvre s'appliquent en fait non pas à un réseau mobile, pouvant comporter une pluralité de terminaux fixes ou mobiles dans ce réseau, mais à un terminal nomade itinérant, se connectant à un réseau fixe.

Les mécanismes ou processus précités permettent à ce terminal nomade itinérant de résoudre la localisation de sa connexion, de s'abonner ou accéder à une diffusion limitée à un site sur lequel il n'est pas connecté, de lier les processus de résolution de localisation et d'accession ou abonnement à une diffusion limitée avec l'aide de la machine de son site d'origine qui gère les accès ou abonnements des terminaux en déplacement. La problématique technique résolue par ce deuxième développement est donc fondamentalement distincte de celle concernant une pluralité de terminaux rattachés à des sous-réseaux IP dont les caractéristiques varient en raison de la mobilité d'ensemble. En effet, dans le cas d'un réseau mobile, les terminaux nomades, mobiles ou fixes dans le cadre du réseau IP mobile et qui sont connectés à ce dernier, n'ont en aucun cas connaissance de la mobilité du réseau, laquelle est entièrement gérée au niveau du routeur mobile MR.

Dans le document US2003/0095523, le procédé pour créer une mobilité dans un réseau IP se base sur un routeur mobile attaché à au moins un serveur de réseau mobile qui, lors d'un mouvement du réseau mobile d'un réseau d'origine à un réseau étranger, obtient un jeu d'adresses multicast au nom du serveur de réseau mobile et lie ce jeu d'adresses et le préfixe de sous-réseau mobile.

Cette information est transmise à un agent d'origine. Quand un message est envoyé à une adresse d'origine d'un nceud de sous-réseau mobile, il est intercepté par l'agent d'origine et transféré au routeur mobile via le jeu d'adresses multicast. Le routeur mobile reçoit le message et l'envoie au noeud destinataire du réseau mobile.

Ce document ne prévoit donc pas la possibilité de diffusion multicast mobile, la diffusion multicast n'étant utilisée que pour joindre les routeurs mobiles.

La présente invention a pour objet de remédier aux inconvénients et limitations des premier et deuxième développements de l'art antérieur en empruntant, toutefois, certains éléments de processus mis en oeuvre par ces derniers.

En particulier, un objet de la présente invention est la mise en oeuvre d'un procédé permettant de gérer à la fois le champ d'action opérationnelle de tout routeur mobile d'information en déplacement et la diffusion Multicast privée de manière optimisée vers tout terminal nomade récepteur et source appartenant à ces sous-réseaux.

Un autre objet de la présente invention est de mettre en oeuvre un procédé et un processus opératoire associé permettant à un terminal nomade fixe ou mobile appartenant à un réseau IP mobile de s'abonner ou accéder automatiquement à la diffusion requise, locale ou non, en fonction de la localisation du réseau mobile IP dans lequel il est connecté.

Un autre objet de la présente invention est également la mise en oeuvre d'un routeur mobile permettant la mise en oeuvre du procédé précité de manière totalement transparente, de même que dans le cas d'un réseau IP fixe, ce processus de diffusion Multicast étant mis en oeuvre au bénéfice des terminaux utilisateur connectés au réseau IP mobile, quelle que soit la localisation de la connexion de ce dernier.

Le procédé de diffusion Multicast vers au moins un terminal nomade utilisateur d'un réseau IP mobile, par l'intermédiaire d'un routeur mobile équipé de fonctions de contrôle et de transmission des accès de tout terminal utilisateur à toute diffusion du type Multicast, objet de la présente invention, est remarquable en ce qu'il consiste, suite à une connexion de ce routeur mobile au réseau IP et à la transmission d'un message de signalisation de ce routeur mobile vers son site d'origine, au niveau de ce site d'origine, à discriminer la localisation de ce routeur mobile vis-à-vis de son site d'origine respectivement de son organisation d'origine et à transmettre à ce routeur mobile une information de localisation. Il consiste en outre, au niveau de ce routeur mobile, pour toute demande d'un terminal nomade utilisateur du réseau IP mobile demandeur d'accès à une diffusion Multicast de groupe et relative à une diffusion Multicast locale au site respectivement à l'organisation d'origine de ce terminal nomade utilisateur demandeur à substituer à cette demande d'accès, lorsque cette information de discrimination de localisation désigne une connexion de ce routeur mobile à l'extérieur de son site d'origine respectivement de son organisation d'origine, une requête d'accès à une diffusion Multicast étendue permettant l'accès à cette diffusion Multicast locale, transmettre, vers ce site d'origine, cette requête d'accès à une diffusion Multicast étendue, recevoir et transformer, au niveau de ce routeur mobile, cette diffusion Multicast étendue en une diffusion Multicast transformée locale, transmettre cette diffusion Multicast transformée locale sur le réseau IP mobile vers au moins ce terminal nomade utilisateur demandeur.

L'invention a en outre pour objet la mise en oeuvre d'un routeur mobile équipé de fonctions de contrôle et de transmission des requêtes de tout terminal utilisateur nomade connecté à un réseau IP mobile d'accès à toute diffusion de type Multicast gérée par ce routeur mobile, ce réseau IP mobile comportant au moins un terminal nomade utilisateur connecté. Il est remarquable en ce qu'il comporte au moins un module de discrimination du type de diffusion Multicast émise par ce terminal nomade utilisateur demandeur, un module de substitution en fonction d'une variable de localisation de la connexion de ce routeur mobile à l'extérieur de son site d'origine respectivement de son organisation d'origine à toute requête de demande d'accès à une diffusion Multicast de groupe destinée au site d'origine et relative à une diffusion Multicast locale au site respectivement à l'organisation d'origine de ce terminal nomade d'une requête d'accès à une diffusion Multicast étendue permettant l'accès à cette diffusion Multicast locale et un module de transformation de toute diffusion Multicast étendue reçue en une diffusion Multicast transformée locale.

Le procédé de diffusion Multicast vers au moins un terminal nomade utilisateur d'un réseau IP mobile, par l'intermédiaire d'un routeur mobile dédié objets de la présente invention trouvent application à la gestion des télécommunications en réseau IP de terminaux mobiles connectés à des réseaux IP mobiles d'entreprises, tels que notamment flottes de véhicules ferroviaires ou autres.

Ils seront mieux compris à la lecture de la description ci-après et à l'observation des dessins dans lesquels, outre les figures 1a et 1b relatives à l'art antérieur,

- la figure 2a représente, à titre illustratif, un organigramme des étapes essentielles de mise en oeuvre du procédé de diffusion Multicast vers au moins un terminal nomade utilisateur d'un réseau IP mobile, conforme à l'objet de la présente invention ;
- la figure 2b représente, à titre illustratif, un détail de mise en oeuvre des étapes du procédé objet de l'invention tel que représenté en figure 2a ;
- la figure 3a représente un processus d'allocation d'adresses IP permanentes et temporaires, connu de l'art antérieur, à des routeurs mobiles associés à des réseaux mobiles d'une entreprise ;
- la figure 3b représente, à titre illustratif, un organigramme de mise en oeuvre d'un processus de localisation de la connexion d'un routeur mobile associé à un réseau IP mobile, permettant la mise en oeuvre du procédé objet de la présente invention ;
- la figure 3c représente, à titre illustratif, un organigramme détaillé de mise en oeuvre de l'étape de comparaison exécutée par le processus de localisation illustré en figure 3b ;

- la figure 4a représente, à titre illustratif, un processus sui generis de transmission Multicast étendue permettant la mise en oeuvre du procédé objet de la présente invention;
- la figure 4b représente, à titre illustratif, un détail de mise en oeuvre d'un processus de transformation de diffusion Multicast locale à un site en une diffusion Multicast globale ou en une diffusion locale à l'organisation d'origine d'un routeur mobile ;
- la figure 5 représente, sous forme d'un modèle fonctionnel, un routeur mobile dédié permettant la mise en oeuvre du procédé objet de la présente invention ;
- les figures 6a, 6b et 6c représentent, de manière illustrative, différentes situations de mise en oeuvre du procédé objet de l'invention, correspondant à des positions de connexion distinctes du routeur mobile associé à un réseau IP mobile.

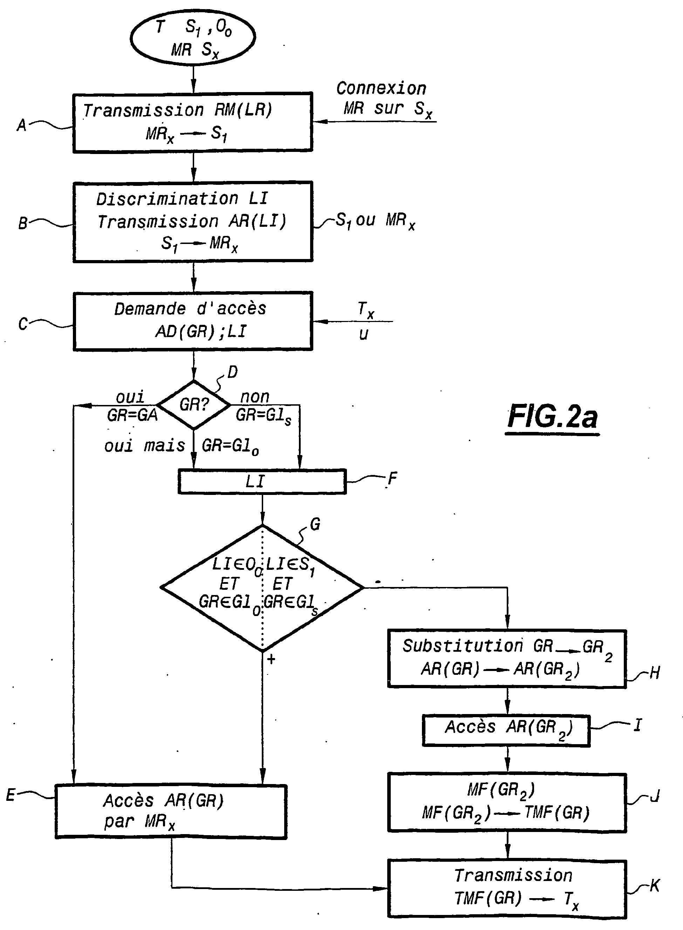

Une description plus détaillée du procédé de diffusion Multicast vers au moins un terminal nomade utilisateur d'un réseau IP mobile, conforme à l'objet de l'invention, sera maintenant donnée en liaison avec la figure 2a.

En référence à la figure précitée, on considère un terminal nomade T appartenant à un site d'origine $S_1$ et bien entendu à une organisation d'origine $O_0$, ce terminal nomade étant amené en fonction du déplacement de l'utilisateur U de ce dernier en particulier par l'intermédiaire d'un réseau mobile MN et d'un routeur mobile MR associé à ce dernier à se rendre sur un site quelconque $S_x$ et à se connecter sur le site quelconque $S_x$ par l'intermédiaire du routeur mobile MR précité.

On indique d'une manière générale que le site quelconque $S_x$ appartient ou non au site et/ou à l'organisation d'origine $O_0$ auquel le routeur mobile MR est rattaché.

En référence à la figure 2a, l'étape de connexion A du routeur mobile MR sur le site $S_x$ est représentée indépendamment de l'initiative de l'utilisateur U, du terminal T, le routeur mobile MR prenant alors la référence $MR_x$ du seul fait de la connexion de ce routeur mobile sur le site quelconque $S_x$ précité.

Du seul fait de cette connexion, et de manière classique, le routeur mobile $MR_x$ ainsi connecté est en mesure de transmettre, si nécessaire, un message de requête de signalisation de ce routeur mobile vers le site d'origine $S_1$, ce message de signalisation étant noté RM(LR). Un tel message n'est pas nécessaire lorsque le routeur mobile est connecté à son lien ou sous-réseau d'origine.

A titre d'exemple non limitatif, on indique que dans le message de signalisation précité, le paramètre LR désigne une référence de localisation formée par exemple par une adresse IP allouée par le site d'accueil $S_x$ du routeur mobile $MR_x$, c'est-à-dire le site quelconque $S_x$, en particulier par l'administrateur du site quelconque $S_x$ précité.

Suite à la transmission du message de signalisation RM(LR) le procédé objet de l'invention consiste, au niveau du site d'origine $S_1$, et suite à la réception de ce message de signalisation, en une étape B, à discriminer la localisation du routeur mobile $MR_x$, vis-à-vis de son site d'origine $S_1$, respectivement de son organisation d'origine $O_0$, à partir du message de signalisation précité, la discrimination s'entendant de l'établissement d'une information de discrimination de localisation LI, ainsi qu'il sera décrit ultérieurement dans la description.

L'étape consistant à discriminer est alors suivie d'une étape consistant à transmettre au routeur mobile $MR_x$ l'information de discrimination de localisation LI précitée, afin que ce dernier puisse utiliser l'information de localisation discriminée.

L'étape B précitée est alors suivie, au niveau du routeur mobile $MR_x$, pour toute demande du terminal nomade d'accès à une diffusion Multicast de groupe destinée au site d'origine $S_1$ et relative à une diffusion Multicast locale au site respectivement à l'organisation d'origine du routeur mobile $MR_x$, la demande d'accès étant notée AD(GR), GR désignant en fait l'adresse de diffusion Multicast de groupe dans le site d'origine, à substituer, en des étapes D, F, G, H telles que représentées en figure 2a, à la demande d'accès AD(GR) une requête d'accès à une diffusion Multicast étendue, lorsque, d'une part, la demande d'accès AD(GR) est relative à une diffusion Multicast locale au site $S_1$ respectivement à l'organisation d'origine $O_0$ du terminal nomade et que, d'autre part, l'information de discrimination de localisation LI désigne une connexion du routeur mobile $MR_x$ à l'extérieur de son site $S_1$ respectivement de son organisation d'origine $O_0$.

On comprend, en particulier, que grâce à la substitution précitée, toute demande d'accès relative à une diffusion Multicast locale au site $S_1$ respectivement à l'organisation d'origine $O_0$ du routeur mobile $MR_x$ n'est pas accessible à partir d'un site quelconque $S_x$ de connexion du routeur mobile à l'extérieur de son site respectivement à l'extérieur de son organisation d'origine, mais que, par contre, la requête d'accès à une diffusion Multicast étendue permet l'accès à la diffusion Multicast locale au site respectivement à l'organisation d'origine du routeur mobile considéré.

L'étape de substitution précitée est alors suivie d'une étape I consistant à transmettre vers le site d'origine la requête d'accès à la diffusion Multicast étendue ainsi qu'il sera décrit ultérieurement dans la description.

En particulier, on indique que la requête d'accès à la diffusion Multicast étendue est notée $AR(GR_2)$, l'opération de substitution précitée consistant, ainsi qu'il sera décrit de manière plus détaillée ultérieurement dans la description, à substituer à l'adresse GR de demande d'accès à une diffusion Multicast de groupe une adresse $GR_2$ de diffusion

Multicast étendue permettant d'assurer une diffusion de données semblables.

L'étape précitée est suivie d'une étape J consistant à recevoir et transformer la diffusion Multicast étendue en diffusion Multicast transformée locale au niveau du routeur mobile MR$_x$, opérations symbolisées par la rotation:

$$MF\ (GR_2)$$

$$MF\ (GR_2) \rightarrow TMF\ (GR).$$

L'étape J est suivie d'une étape K consistant à transmettre la diffusion Multicast transformée locale TMF (GR) sur le réseau IP mobile vers le terminal nomade utilisateur demandeur, étape illustrée par la relation TMF (GR) $\rightarrow$ T$_x$ sur la figure 2a.

Dans un premier mode de mise en oeuvre du procédé objet de la présente invention, on indique que l'opération de substitution précitée peut être gérée ainsi que représentée en figure 2a.

Suite à l'étape C de demande d'accès élaborée par le terminal nomade T, désigné Tx, à la seule initiative de l'utilisateur U, l'opération de substitution peut consister à effectuer un test D de discrimination de l'adresse GR de la demande d'accès à une diffusion Multicast de groupe, le test de l'étape D consistant à discriminer si l'adresse GR précitée est une adresse globale GA, une adresse de groupe locale à l'organisation GI$_0$ ou encore une adresse de groupe locale au site d'origine GI$_s$.

Pour la mise en oeuvre du test de l'étape D, on indique que la valeur de l'adresse GR de demande d'accès à une diffusion Multicast de groupe est simplement discriminée en valeur par rapport à une loi d'établissement de valeur des adresses d'accès globales GA, des adresses de groupe locales à l'organisation GI$_0$, respectivement des adresses de groupe locales au site GI$_s$.

On indique que les adresses globales GA, locales à l'organisation GI$_0$ respectivement au site GI$_s$ peuvent, à titre d'exemple non limitatif, correspondre à des valeurs d'adresses attribuées par l'administrateur du site d'origine S$_1$ dans des plages de valeurs disjointes afin d'effectuer une simple discrimination par comparaison.

Sur réponse positive d'appartenance de l'adresse GR de la demande d'accès à l'ensemble des adresses globales GA, cette réponse positive étant notée "oui" sur la figure 2a, la demande d'accès à une diffusion Multicast de groupe est alors transmise en une étape E directement sous forme d'une requête d'accès notée AR(GR), la demande de diffusion Multicast de groupe étant accessible par le routeur mobile MR$_x$ et par le terminal nomade T$_x$ indépendamment de la localisation de son site de connexion S$_x$ en raison du caractère global de la diffusion Multicast.

Lorsque l'adresse GR de la demande de diffusion Multicast de groupe n'est pas une adresse globale, elle correspond soit à une adresse de diffusion Multicast de groupe locale à l'organisation d'origine GI$_0$ ou locale au site d'origine GI$_s$.

Cette situation est représentée de manière symbolique au test D de la figure 2a par la réponse "oui mais" lorsque l'adresse GR est une adresse globale à l'organisation d'origine GI$_0$ et par la réponse "non" lorsque l'adresse GR est au contraire une adresse globale au site GI$_s$. Dans les deux situations précitées représentées par les situations "oui mais" et "non" à la réponse au test D, la connaissance de la localisation de la connexion ou plus exactement du site du routeur mobile MR$_x$ sur le site quelconque S$_x$ est alors nécessaire.

En conséquence, les réponses "oui mais" et "non" au test D sont alors suivies d'un appel à l'étape F de l'information de localisation LI laquelle a été transmise routeur mobile MR$_x$ à l'étape B par le site d'origine S$_1$.

L'étape F est alors suivie d'une étape G ayant pour objet de discriminer l'appartenance de l'adresse GR de demande de diffusion Multicast de groupe vis-à-vis de l'ensemble des adresses globales locales à l'organisation d'origine lorsque le terminal nomade est connecté sur un site distinct du site d'origine mais appartenant à l'organisation d'origine O$_0$ respectivement de l'adresse GR de demande de diffusion de groupe appartenant à l'ensemble des adresses de groupe locales au site d'origine et de la connexion du routeur mobile MR$_x$ sur ce dernier.

En conséquence, le test de l'étape G permet d'établir les relations logiques suivantes :

$$LI \in O_0 \quad ET\ GR \in Gl_0\ ;$$

$$LI \in S_1 \quad ET\ GR \in Gl_s.$$

Sur réponse positive à l'une ou l'autre des relations logiques précitées, la demande d'accès à une diffusion Multicast de groupe AD(GR) est alors établie sous forme d'une requête d'accès à cette même adresse GR sous la forme de requête AR(GR) à l'étape E de la figure 2a.

Au contraire, sur réponse négative à l'une et l'autre des relations logiques du test de l'étape G, une étape H est appelée, afin de permettre la substitution à l'adresse GR de demande d'accès à une diffusion Multicast de groupe, qui ne peut être reçue sur le site quelconque $S_x$ de connexion du routeur mobile $MR_x$, d'une adresse $GR_2$ permettant au contraire de recevoir sur le site $S_x$ précité la diffusion Multicast de groupe précédemment mentionnée.

L'étape H est alors suivie d'une étape I consistant à transmettre la requête d'accès $AR(GR_2)$ dans laquelle l'adresse de diffusion Multicast de groupe a été remplacée par une adresse $GR_2$ dite de diffusion Multicast étendue permettant bien entendu l'accès à la diffusion Multicast locale inaccessible à partir du routeur mobile $MR_x$ connecté sur le site quelconque $S_x$.

Le mode opératoire de la substitution réalisé à l'étape H sera décrit ultérieurement dans la description.

D'une manière générale, on observera sur la figure 2a que la référence de localisation LR, d'une part, et l'adresse GR de demande de diffusion Multicast de groupe, d'autre part, sont bien entendu des variables indépendantes laissées sensiblement à la seule appréciation de l'utilisateur U, en fonction des déplacements du réseau IP mobile et du routeur mobile associé à ce dernier.

Pour cette raison, il est bien entendu envisageable d'intervertir, le cas échéant, la succession des étapes D, F et G sans sortir du cadre de l'objet de la présente invention, la discrimination de l'appartenance de la référence de localisation LI à l'organisation respectivement au site d'origine pouvant être effectuée préalablement à la discrimination de la valeur de l'adresse de demande de diffusion Multicast de groupe GR par exemple.

Une telle interversion ne sera pas décrite car elle est du domaine des compétences de l'homme du métier.

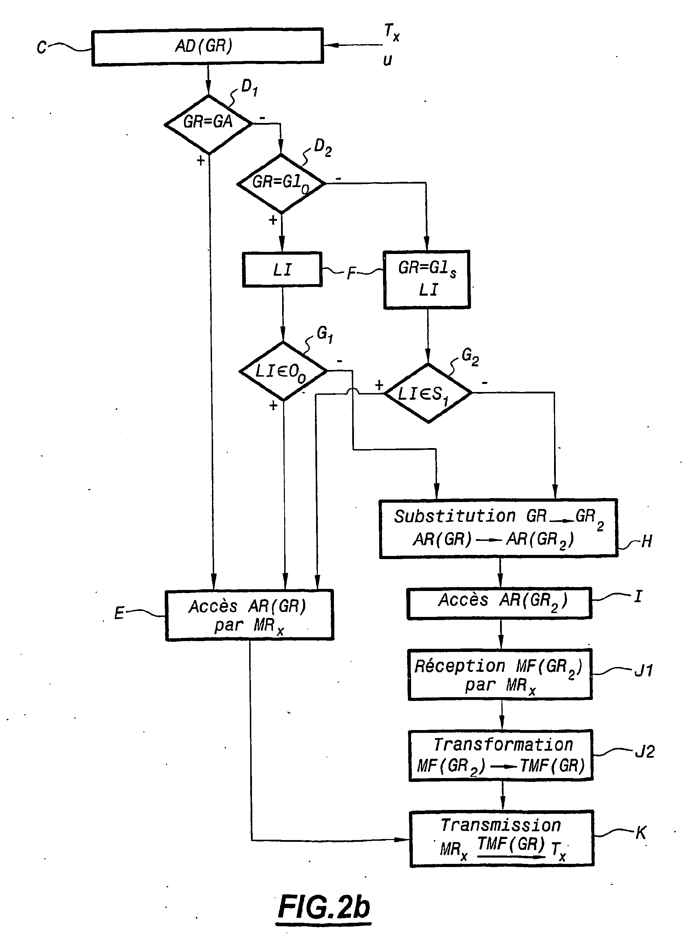

En ce qui concerne la mise en oeuvre des étapes logiques représentées à l'étape D et G de la figure 2a, celles-ci peuvent être mises en oeuvre ainsi que représenté en figure 2b, l'étape D pouvant être subdivisée en fait en deux tests successifs $D_1$ et $D_2$ dans lesquels l'adresse de diffusion Multicast de groupe GR est successivement comparée à l'ensemble des adresses globales de groupe GA à la sous-étape $D_1$, la réponse négative à la sous-étape précitée permettant d'appeler la sous-étape $D_2$ de test d'appartenance de l'adresse de groupe GR à l'ensemble des adresses de groupe locales à organisation $GI_0$. Sur réponse positive à la sous-étape $D_2$ on se retrouve dans la situation de la réponse "oui mais" de l'étape D de la figure 2a et sur réponse négative à la sous-étape $D_2$, on se retrouve dans la situation de la réponse négative "non" au test de l'étape D de la figure 2a.

L'étape G de la figure 2a peut également être subdivisée en deux sous-étapes $G_1$ respectivement $G_2$ d'appartenance de la référence de localisation LI à l'organisation d'origine $O_0$ respectivement au site d'origine $S_1$.

Les étapes E, F, H et I sont alors appelées de la même manière que dans le cas de la figure 2a.

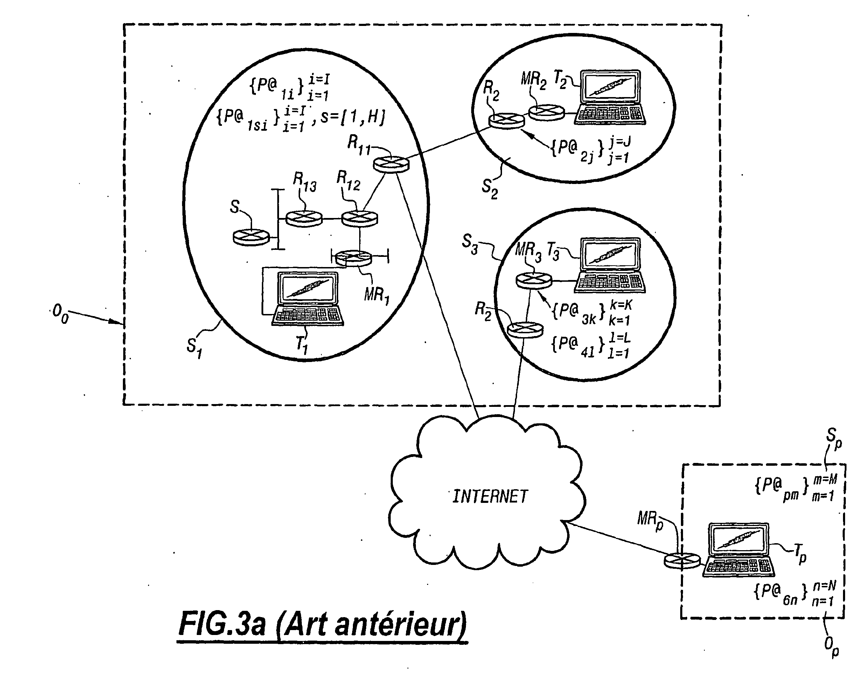

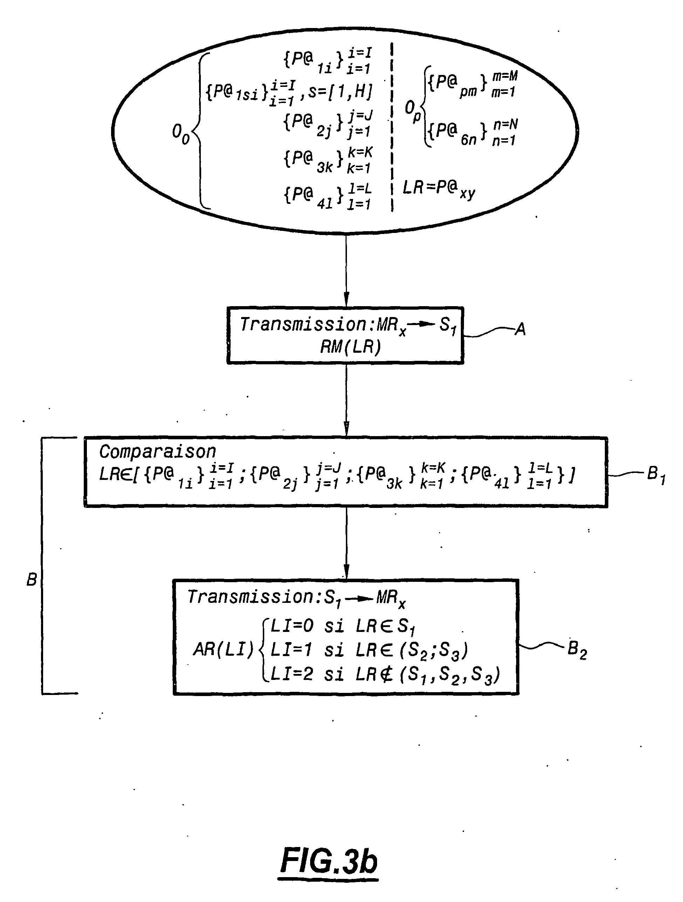

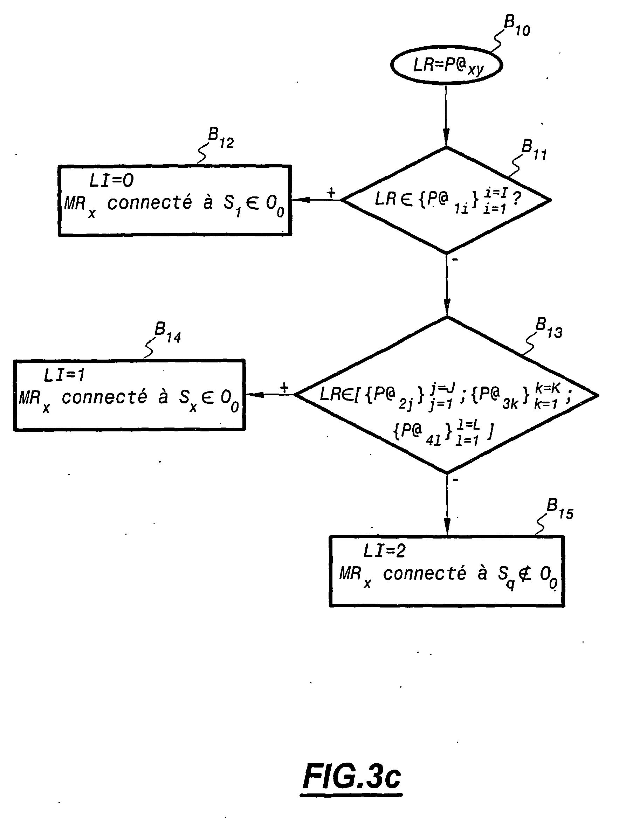

Une description plus détaillée d'un processus sui generis de discrimination du site de connexion $S_x$ vis-à-vis du site et/ou de l'organisation multisite d'origine d'un routeur mobile $MR_x$ conforme à l'objet de la présente invention, sera maintenant donnée en liaison avec les figures 3a, 3b et 3c.

Sur la figure 3a, on a représenté une organisation multisite d'origine $O_0$ comportant par exemple trois sites $S_1$, $S_2$, $S_3$, le site $S_1$ constituant le site d'origine correspondant à un réseau local, par exemple de type IP, comportant une pluralité de routeurs $R_{11}$, $R_{12}$ et $R_{13}$ et un serveur S permettant d'assurer la gestion de l'organisation multisite d'origine $O_0$ précitée.

Le site $S_2$ est par exemple constitué par un sous-réseau local de type IP relié au réseau local constitutif du réseau de rattachement d'origine du site $S_1$.

Enfin, le site $S_3$ est un site appartenant à l'organisation multisite d'origine $O_0$, le site $S_3$ étant toutefois relié au réseau de rattachement d'origine et au site $S_1$ par l'intermédiaire du réseau INTERNET par exemple.

Un terminal nomade $T_1$ appartenant à un réseau mobile est ainsi susceptible d'opérer dans son réseau de rattachement d'origine, ce terminal référencé $T_1$ étant connecté sur le site d'origine $S_1$ auquel il est rattaché et connecté par le routeur mobile $MR_1$ au routeur $R_{12}$ par exemple et/ou hors de son réseau de rattachement d'origine, ce terminal étant alors noté $T_2$ lorsqu'il est connecté au sous-réseau local constitutif du site $S_2$ par l'intermédiaire du routeur mobile $MR_2$, connecté au routeur $R_2$ de ce sous-réseau local.

Le terminal nomade précité peut également être connecté hors de son réseau de rattachement d'origine sur le site $S_3$ appartenant à l'organisation multisite d'origine $O_0$ mais par l'intermédiaire du réseau INTERNET, le terminal nomade précité étant noté $T_3$ dans cette situation et connecté par l'intermédiaire du routeur mobile $MR_3$.

Enfin, le terminal nomade précité peut être connecté sur un site quelconque noté $S_p$ n'appartenant pas à l'organisation multisite d'origine $O_0$ mais au contraire à une organisation multisite quelconque, notée $O_p$, le terminal nomade précité portant la référence $T_p$ dans cette situation, étant connecté par l'intermédiaire du routeur mobile $MR_p$.

On comprend bien entendu, à titre d'exemple non limitatif, que le routeur mobile précité portant les références $MR_1$, $MR_2$, $MR_3$ et $MR_p$ peut être constitué par le même routeur mobile en déplacement par l'intermédiaire du réseau mobile auquel il est associé, ou bien par tout réseau et routeur mobile distinct susceptible de mettre en oeuvre le procédé objet de la présente invention.

Ainsi que représenté sur la figure 3a, au routeur mobile $MR_1$ est allouée par le site de rattachement d'origine et finalement par le réseau de rattachement d'origine une adresse permanente interne notée $P@_{1i}$ pour toute connexion

en réseau du routeur mobile MR$_1$ sur un site appartenant à ce réseau de rattachement d'origine.

De même, une adresse temporaire interne est allouée au routeur mobile référencé MR$_2$ ou MR$_3$ pour toute connexion en réseau du routeur mobile précité sur un autre site appartenant à l'organisation multisite d'origine O$_0$. On comprend, en particulier, que l'administrateur du réseau IP constitutif de l'organisation multisite d'origine O$_0$ et en définitive l'administrateur des sites S$_1$, S$_2$ et S$_3$ est alors en mesure d'allouer, lorsque le routeur mobile en position MR$_2$ est connecté sur le site S$_2$, une adresse temporaire interne notée P@$_{2j}$ ou au contraire, une adresse temporaire interne notée P@$_{3k}$ ou P@$_{4l}$, lorsque le routeur mobile en position MR$_3$ est connecté sur le site S$_3$. On indique en particulier que la distinction entre les adresses temporaires internes P@$_{3k}$ ou P@$_{4l}$ correspond à une adresse temporaire dite de mobilité sensiblement arbitraire allouée par le centre serveur S respectivement à une adresse de translation par exemple.

On rappelle, en particulier, que, dans le cas d'une entreprise, l'administrateur dispose d'un ensemble d'adresses IP, dites privées, lesquelles peuvent être utilisées librement ; tout administrateur d'un autre réseau IP peut également réutiliser librement ces mêmes adresses IP (document RFC 1918 de l'IETF). De plus, lorsque cette entreprise désire communiquer sur l'INTERNET, elle doit alors utiliser des adresses IP globalement uniques, uniques dans le monde et donc quelque soit le réseau connecté à l'INTERNET. Les adresses globalement uniques sont appelées publiques et attribuées soit par le fournisseur d'accès à l'INTERNET, soit par un organisme régional RIR pour "Regional Internet Registry". Le plus souvent, les entreprises utilisent un équipement entre leur réseau et l'INTERNET qui translate les adresses privées en adresses publiques. Dans le procédé objet de l'invention, l'adresse IP attribuée au routeur mobile RM$_x$ peut être privée et les datagrammes utilisés pour atteindre le serveur S peuvent néanmoins traverser un translateur d'adresse en passant par l'INTERNET et donc paraître venir d'une adresse publique. Une telle adresse publique peut, par exemple être possédée par le site S$_3$ de la figure 1 ou tout autre site.

Enfin, lorsque le routeur mobile est connecté sur un site quelconque, tel que le site S$_p$ n'appartenant pas à l'organisation multisite d'origine mais à une autre organisation multisite O$_p$, alors l'adresse allouée au routeur mobile MR$_p$ en position sur la figure 1 est désignée P@$_{pm}$ et constitue une adresse temporaire externe. P@$_{pm}$ désigne une adresse privée et P@$_{6n}$ désigne une adresse publique utilisée en translation d'adresse de l'adresse privée P@$_{pm}$ précitée.

On comprend, dans ces conditions, que la notion d'adresse permanente et temporaire interne correspond au caractère interne des adresses allouées vis-à-vis de l'organisation multisite d'origine O$_0$, alors que le caractère externe de l'adresse temporaire, lorsque le terminal nomade est connecté à un site n'appartenant pas à l'organisation multisite d'origine, correspond au caractère externe de cette adresse vis-à-vis de l'organisation multisite d'origine précitée.

On comprend bien entendu que, a priori, seules les adresses internes sont connues de l'organisation multisite d'origine O$_0$, les adresses externes n'étant pas connues de cette dernière.

En conséquence et conformément à un aspect du procédé objet de la présente invention, il est considéré que les adresses précitées internes et/ou externes forment, pour le terminal nomade, une référence de localisation par rapport à l'organisation multisite d'origine O$_0$.

Ainsi, à titre d'exemple non limitatif, on note:

$$\{P@_{1si}\}_{i=1,}^{i=I}\ s = 1\ \grave{a}\ H,$$

l'ensemble des adresses permanentes internes d'un des sous-réseaux allouées à l'ensemble des routeurs mobiles rattachés au réseau de rattachement d'origine support du site d'origine S$_1$. Cet ensemble est l'ensemble des adresses permanentes internes du lien d'origine ou sous-réseau d'origine et l'ensemble {P@$_{1i}$} fait donc référence à l'ensemble des adresses du site d'origine S$_1$, tous les sous-réseaux étant confondus;

$$-\{P@_{2j}\}_{j=1}^{j=J},\ \{P@_{3k}\}_{k=1}^{k=K},\ \{P@_{4l}\}_{l=1}^{l=L}$$

l'ensemble des adresses temporaires internes allouées à l'ensemble des routeurs mobiles précités pour toute connexion de l'un de ces routeurs mobiles sur un autre site appartenant à l'organisation multisite d'origine O$_0$;

$$- \left\{ P@_{pm} \right\}_{m=1}^{m=M}$$

l'ensemble des adresses temporaires externes allouées par une organisation multisite $O_p$ distincte de l'organisation multisite d'origine et pour tout site $S_p$ appartenant à cette organisation multisite distincte ;

$$- \left\{ P@_{6n} \right\}_{n=1}^{n=N}$$

l'ensemble des adresses publiques utilisées par translation des adresses privées $P@_{pm}$.

En référence à la figure 3b, pour toute connexion du routeur mobile précité en réseau sur un site déterminé, le processus sui generis de localisation objet de l'invention consiste en une étape A à transmettre du terminal nomade $T_1$, $T_2$, $T_3$ ou $T_p$ vers le réseau de rattachement d'origine et finalement vers le site $S_1$ appartenant à l'organisation multisite d'origine $O_0$, un message d'enregistrement comportant au moins la référence de localisation précédemment citée.

Sur la figure 3b, le message d'enregistrement est noté:

RM (LR) où LR désigne la référence de locatisation précitée. On rappelle que la référence de localisation est formée par l'une des adresses allouée au routeur mobile en déplacement précédemment mentionné selon les situations représentées à la figure 3a.

Le message de signalisation peut permettre d'effectuer un enregistrement de la connexion du routeur mobile précité.

En particulier, de manière avantageuse non limitative, on indique que la référence de localisation LR peut consister en une valeur codée, fonction de l'adresse allouée. Dans cette hypothèse, cette valeur codée peut être obtenue au niveau du routeur mobile, à partir d'une fonction de codage spécifique XOR bit à bit ou autre de l'adresse permanente avec une clé de paramétrage, la fonction de codage réciproque et la clé de paramétrage permettant de restituer l'adresse permanente étant connues du seul serveur S du site d'origine $S_1$. La fonction de codage et la fonction de décodage réciproque identité permettent par exemple de transmettre uniquement l'adresse permanente d'origine. Dans ce but, le routeur mobile peut effectuer un test, pouvant comparer le résultat du codage de la référence de localisation LR, au moyen de la fonction de codage f, désigné f(LR), et le résultat de cette même fonction de codage appliquée sur l'adresse permanente d'origine $\{P@_{1si}\}$. Le terminal nomade ne connaissant que f($\{P@_{1si}\}$) procède au calcul de f(LR) pour pouvoir effectuer cette comparaison. Cette dernière permet au routeur mobile de détecter s'il est ou non connecté à son lien d'origine sur son site d'origine $S_1$. Le serveur S doit procéder au décodage de la valeur résultat du codage $RP@_{1sl} = f$

$\{P@_{1si}\}$ pour retrouver le véritable ensemble $\left\{ P@_{1si} \right\}_{i=1}^{i=I}$, s fixe. Seul le serveur S connaît la fonction inverse $f^{-1}$,

laquelle appliquée à la valeur codée de l'adresse permanente $f^{-1}(f\{P@_{1si}\}) = \{P@_{1si}\}$ restitue cette dernière. Le serveur S peut ensuite comparer la valeur de référence de localisation LR avec $\left\{ P@_{1si} \right\}_{i=1}^{i=I}$, s = 1 à H, pour vérifier que le terminal est sur son site d'origine.

L'étape A est alors suivie d'une étape $B_1$ consistant à comparer pour identification la référence de localisation LR aux valeurs d'adresses de l'un au moins des ensembles précédemment cités formés par l'ensemble des adresses permanentes internes allouées à l'ensemble des routeurs mobiles rattachés au réseau de rattachement d'origine et par l'ensemble des adresses temporaires internes allouées à cet ensemble de routeur mobile pour toute connexion sur un autre site appartenant à l'organisation multisite d'origine $O_0$.

Sur la figure 3b, l'opération de comparaison est symbolisée par la relation:

$$LR \in \left[ \left\{ P@_{1i} \right\}_{i=1}^{i=I} ; \left\{ P@_{2j} \right\}_{k=1}^{k=K} ; \left\{ P@_{3k} \right\}_{k=1}^{k=K} ; \left\{ P@_{4l} \right\}_{l=1}^{l=L} \right]$$

L'étape $B_1$ de comparaison est alors suivie d'une étape $B_2$ consistant à transmettre du site de rattachement d'origine $S_1$ vers le routeur mobile, selon la position de ce dernier, un message de réponse ou d'acquittement de signalisation contenant au moins une information de discrimination de localisation du routeur mobile précité.

A l'étape $B_2$, le message d'acquittement d'enregistrement est noté:

AR (LI).

Pour le message précité LI désigne l'information de discrimination de localisation transmise au routeur mobile.

Selon un aspect remarquable du procédé objet de l'invention, l'information de discrimination de localisation LI désigne :

- soit la connexion du routeur mobile sur son réseau de rattachement d'origine, c'est-à-dire sur son site $S_1$, sur identification de la référence de localisation LR dans l'ensemble des adresses permanentes internes ;

- soit la connexion du routeur mobile en réseau sur un autre site appartenant à l'organisation multisite d'origine sur identification de la référence de localisation LR dans l'ensemble des adresses temporaires internes précédemment citées;

- ou encore la connexion du routeur mobile en réseau sur un site quelconque n'appartenant pas à l'organisation multisite d'origine, en l'absence d'identification de la référence de localisation LR dans l'un et l'autre ensemble des adresses permanentes internes, ensemble des adresses temporaires internes.

Sur la figure 3b, à l'étape $B_2$ précitée, le contenu de l'information de discrimination de localisation est représenté par les relations :

$$LI = 0 \text{ si } LR \in S_1 \ ;$$

$$LI = 1 \text{ si } LR \in (S_2; S_3) \ ;$$

$$LI = 2 \text{ si } LR \notin (S_1, S_2, S_3).$$

Dans la relation précédente, on indique que les relations d'appartenance aux sites $S_1$, $S_2$ et $S_3$ sont représentées de manière symbolique mais exécutées par la vérification d'appartenance de la référence de localisation à l'ensemble des adresses associées à chacun des sites précités ainsi que mentionné précédemment dans la description.

On comprend également que l'absence d'appartenance de la référence de localisation LR est également obtenue par la vérification d'absence d'identification de la référence de localisation LR dans tous les ensembles d'adresses associées à chacun des sites $S_1$, $S_2$, $S_3$ appartenant à l'organisation multisite d'origine.

Bien entendu, dans la relation symbolique donnée pour l'étape $B_2$ de la figure 3b, les valeurs 0, 1 et 2 de l'information de localisation LI sont totalement arbitraires.

Enfin, à l'étape $B_2$ de la figure 3b, $MR_x$ désigne en fait le routeur mobile dans la position $MR_1$, $MR_2$, $MR_3$ ou $MR_p$.

D'une manière plus spécifique, on indique que l'ensemble des adresses permanentes internes $\left\{ P@_{1i} \right\}_{i=1}^{i=I}$ et l'ensemble des adresses temporaires internes $\left\{P@_{2j}\right\}_{j=1}^{j=J}$, $\left\{P@_{3k}\right\}_{k=1}^{k=K}$ et $\left\{P@_{4l}\right\}_{l=1}^{l=L}$ sont formés avantageusement par des ensembles disjoints de valeurs d'adresses allouées par le réseau de rattachement d'origine au routeur mobile qui en fait la demande lors de sa connexion en réseau sur l'un des sites appartenant à l'organisation multisite d'origine. Cette opération est bien entendu réalisée sous le contrôle du serveur S et de l'administrateur réseau responsable de ce dernier.

Toutefois, les ensembles $\left\{P@_{1i}\right\}_{i=1}^{i=I}$, $\left\{P@_{2j}\right\}_{j=1}^{j=J}$ et $\left\{P@_{4l}\right\}_{l=1}^{l=L}$ étant constitués par des ensembles disjoints de valeurs d'adresses, l'ensemble $\left\{P@_{3k}\right\}_{k=1}^{k=K}$ peut être un ensemble non disjoint, recouvrant les ensembles $\left\{P@_{1i}\right\}_{i=1}^{i=I}$ et $\left\{P@_{2j}\right\}_{j=1}^{j=J}$ car les adresses de l'ensemble $\left\{P@_{3k}\right\}_{k=1}^{k=K}$ peuvent être translatées en des adresses $\left\{P@_{4l}\right\}_{l=1}^{l=L}$.

On indique en outre que l'ensemble des adresses temporaires internes est formé soit par des valeurs d'adresses prédéterminées, c'est-à-dire par le sous-ensemble $\left\{P@_{2j}\right\}_{j=1}^{j=J}$ et $\left\{P@_{3k}\right\}_{k=1}^{k=K}$, ces valeurs d'adresses prédéterminées pouvant bien entendu être arbitraires mais contenues dans une plage d'adresses spécifiques déterminée par l'administrateur réseau ou par des valeurs d'adresses calculées par translation. Par exemple les valeurs du sous-ensemble $\left\{P@_{4l}\right\}_{l=1}^{l=L}$ sont calculées à partir des valeurs d'adresses formant des adresses permanentes internes précitées par et sous l'autorité du réseau de rattachement d'origine et de l'administrateur réseau.

En ce qui concerne l'adresse temporaire externe allouée au routeur mobile en position $MR_p$ sur la figure 3a, pour toute connexion en réseau sur un site quelconque $S_p$ n'appartenant pas à l'organisation multisite d'origine, on indique qu'une telle adresse temporaire peut par exemple être formée par une valeur d'adresse calculée par translation à partir de l'adresse permanente allouée au routeur mobile par l'organisation multisite distincte $O_p$ sous l'autorité de l'administrateur de cette dernière, mais translatée en une adresse IP unique sur l'INTERNET, avant d'atteindre le serveur S au sein de l'organisation multisite d'origine $O_0$, entre l'organisation multisite $O_p$ et l'INTERNET.

En ce qui concerne une mise en oeuvre spécifique de l'étape de comparaison $B_1$ de la figure 3b, on indique, à titre d'exemple non limitatif, qu'une telle mise en oeuvre peut consister en une succession d'étapes telles que représentées en figure 3c.

Sur la figure 3b et la figure 3c, la référence de localisation LR est notée LR = $P@_{xy}$ où x désigne la référence de situation du routeur mobile et y une adresse allouée dans cette situation.

A titre d'exemple non limitatif, les étapes précitées peuvent alors comprendre, dans le cadre de la mise en oeuvre de l'étape $B_1$, une étape $B_{11}$ d'appartenance de la référence de localisation à l'ensemble des adresses permanentes internes, une réponse positive à ce test $B_{11}$ permettant de conclure, en une étape $B_{12}$, à la valeur 0 de l'information de discrimination de localisation LI, le routeur mobile $MR_x$ étant alors connecté au site d'origine $S_1$ appartenant à l'organisation multisite d'origine $O_0$.

Au contraire, sur réponse négative au test $B_{11}$, un nouveau test $B_{13}$ est appelé de comparaison de la référence de localisation LR à l'ensemble des adresses temporaires internes ainsi que mentionné précédemment dans la description.

Sur réponse positive au test $B_{13}$, à l'information de localisation LI est allouée la valeur LI=1, le routeur mobile $MR_x$ étant connecté ainsi à un site $S_x$ distinct du site d'origine $S_1$ mais appartenant à l'organisation multisite d'origine $O_0$.

Au contraire sur réponse négative au test $B_{13}$, alors à l'information de localisation LI est affectée la valeur 2, le routeur mobile $MR_x$ étant connecté à un site quelconque $S_p$ n'appartenant pas à l'organisation multisite d'origine $O_0$.

D'une manière plus spécifique non limitative, on indique que l'étape B de discrimination de la valeur de position de connexion LI puis de transmission de cette valeur de position de connexion par le message d'accusé de réception AR (LI) de la figure 2b peut être remplacée au niveau du routeur mobile $MR_x$ par une étape consistant à exécuter une procédure de localisation de la connexion de ce routeur mobile pour engendrer la variable de localisation LI.

Cette variante de mise en oeuvre peut être implémentée pour des réseaux mobiles importants, tels que ceux d'un train ou véhicule ferroviaire. Les bases de données des adresses permanentes et temporaires des routeurs mobiles nécessaires à l'exécution des étapes B1 et B2 des figures 3b et 3c doivent être disponibles au niveau du routeur mobile $MR_x$.

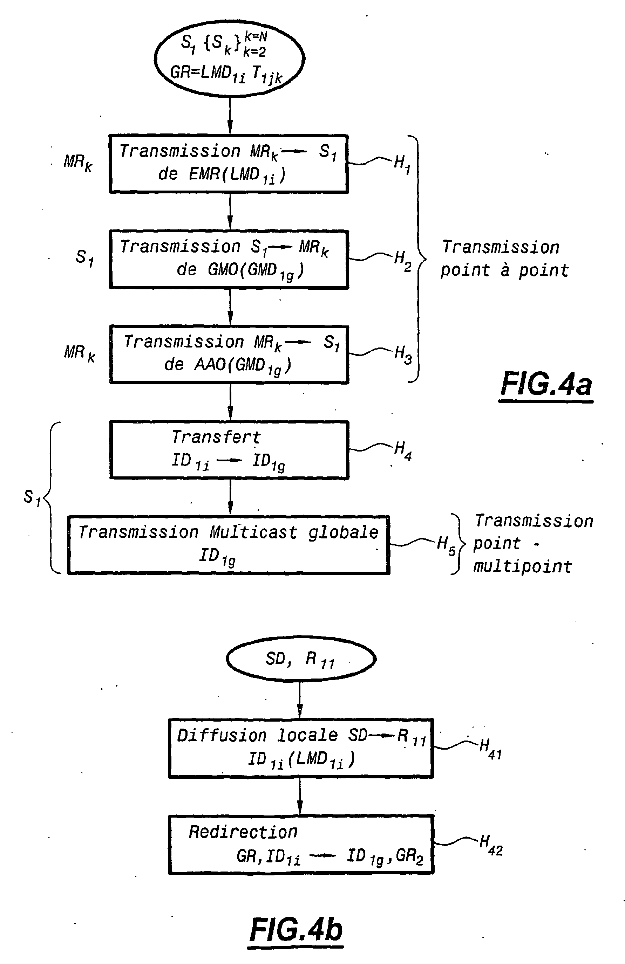

Le processus sui generis de diffusion d'information Multicast étendue, à partir d'une diffusion d'information Multicast locale sur un site d'origine à au moins un terminal nomade utilisateur appartenant à ce site d'origine, vers au moins un site distinct hébergeant ce poste de travail nomade et relié à ce site d'origine par le réseau IP, par l'intermédiaire d'un routeur mobile, conforme à l'objet de la présente invention, sera maintenant décrit en liaison avec les figures 4a et 4b.

D'une manière générale, on rappelle que la diffusion d'information Multicast locale notée $LMD_{1i}$ est engendrée à partir d'une source de diffusion d'information SD dédiée à une première adresse de diffusion d'information Multicast locale dans ce site d'origine $S_1$.

En référence à la figure 4a, la diffusion d'information Multicast locale est désignée $LMD_{1i}$ où les références d'adresses 1 et i représentent la première adresse de diffusion d'information Multicast locale dans ce site d'origine, la référence 1 désignant l'adresse du site d'origine $S_1$ et la référence i désignant l'adresse de la diffusion considérée d'information Multicast locale dans le site d'origine précité. La diffusion d'information Multicast locale peut être assimilée à la première adresse de diffusion $GR_1$ précédemment décrite dans le présent description.

On considère en outre un ensemble de sites distincts $\{S_k\}$, k=2 à k=N, le site d'origine $S_1$ et chacun des sites $S_k$ constituant l'entité ou entreprise multisite précédemment mentionnée dans la description.

Enfin, on considère un terminal nomade noté $T_{1jk}$, l'indice 1 indiquant une référence d'appartenance de ce terminal nomade au site d'origine $S_1$, la référence j dénotant une référence ou code d'identification du terminal nomade considéré, la référence k dénotant la connexion du routeur mobile $MR_k$ considéré sur le site distinct $S_k$ hébergeant ce dernier et la liaison du terminal nomade considéré au site d'origine par l'intermédiaire du routeur mobile $MR_k$ et du réseau IP.

En référence à la figure 4a, le processus sui generis de diffusion d'information Multicast étendue, objet de l'invention, consiste par l'intermédiaire de l'interconnexion du terminal nomade et du routeur mobile $MR_k$ au réseau IP, à transmettre, dans une étape $H_1$, du routeur mobile $MR_k$ vers le site d'origine $S_1$, un message de requête de diffusion d'information Multicast étendue, ce message de requête étant noté EMR ($LMD_{1i}$).

Ainsi qu'indiqué à l'étape $H_1$ de la figure 4a, le message de requête précité contient au moins la première adresse de diffusion d'information Multicast locale $LMD_{1i}$, constituant l'adresse de diffusion Multicast de groupe GR, ainsi qu'un code d'identification du routeur mobile $MR_k$ à partir en particulier des indices 1 et références j et k du poste de travail nomade considéré $T_{1jk}$.

Suite à l'identification du routeur mobile $MR_k$ par le site d'origine $S_1$ à partir des informations contenues dans le message de requête, le processus de diffusion d'information Multicast étendue consiste, en une étape $H_2$, à transmettre du site d'origine $S_1$ vers le routeur mobile $MR_k$ un message d'offre d'accès à une diffusion d'information Multicast globale, ce message d'offre GMO($GMD_{1g}$) d'accès étant noté GMO ($GMD_{1g}$) sur la figure 4a. Le message d'offre d'accès précité comprend au moins une deuxième adresse de diffusion d'information Multicast globale $GMD_{1g}$, c'est-à-dire l'adresse de substitution $GR_2$, dont la source de diffusion est identifiée dans le site d'origine.

En référence à la figure 4a et à l'étape $H_2$ de celle-ci, on comprend que la deuxième adresse de diffusion d'information Multicast globale $GMD_{1g}$ comporte la référence à l'indice 1 relative au site d'origine et la référence g à une adresse de diffusion Multicast globale telle que définie de manière spécifique selon la norme RFC2365 précédemment mentionnée dans la description.

Suite à la réception du message d'offre d'accès GMO ($GMD_{1g}$) par le routeur mobile $MR_k$, le processus de diffusion d'information Multicast étendue consiste ensuite en une étape $H_3$ à transmettre du routeur mobile $MR_k$ précité vers le site d'origine $S_1$ par l'intermédiaire du réseau IP un message d'acceptation d'offre d'accès aux informations en diffusion à la deuxième adresse de diffusion d'information Multicast globale.

A l'étape $H_3$ de la figure 4a, le message d'acceptation de l'offre d'accès est noté AAO ($GMD_{1G}$).

Après réception du message d'acceptation d'offre d'accès AAO ($GMD_{1G}$) au niveau du site d'origine $S_1$, le processus de diffusion d'information Multicast étendue comprend une étape $H_4$ consistant à transférer des informations à diffuser, mémorisées à la première adresse de diffusion et notées pour cette raison $ID_{1i}$ à la deuxième adresse de diffusion. Les informations sont mémorisées sous la deuxième adresse de diffusion notée $ID_{1g}$.

Par cette simple opération, les informations diffusées selon une diffusion d'informations Multicast locale sur le site d'origine $S_1$ peuvent alors être diffusées selon une diffusion d'information Multicast étendue par l'intermédiaire de l'étape $H_5$ suivante représentée en figure 4a.

L'étape $H_5$ précitée consiste alors à transmettre par diffusion Multicast globale les informations à diffuser sous la deuxième adresse $ID_{1g}$. Ceci permet au routeur mobile $MR_k$ interconnecté sur le site distinct $S_k$ de recevoir sur le site distinct précité des informations en diffusion sous la première adresse de diffusion locale diffusées alors sous la deuxième adresse de diffusion globale.

En référence à la même figure 4a, on indique que les étapes $H_1$, $H_2$ et $H_3$ représentées sur cette dernière, relatives à la transmission entre le routeur mobile $MR_k$ et le site d'origine $S_1$ du message de requête de diffusion Multicast IP étende EMR ($LMD_{1i}$), du message d'offre d'accès à une diffusion Multicast globale GMO ($GMD_{1g}$) et du message d'acceptation d'offre d'accès AAO ($GMD_{1G}$) sont exécutées en mode point à point.

L'exécution de ce mode de transmission pour les étapes précitées est rendue possible grâce à la communication des adresses respectives 1 du site d'origine respectivement k du site distinct $S_k$ considéré, l'indice j ou référence d'adresse du poste de travail nomade pouvant consister alors en un code d'identification de ce dernier et du routeur mobile identifié par les indices k et j précitées.

Au contraire et selon un aspect remarquable du procédé objet de la présente invention, l'étape $H_5$ de transmission Multicast globale est effectuée en mode point-multipoint.

On comprend, dans ces conditions, que le processus de transmission des informations diffusées sous la deuxième adresse, transmission Multicast globale à l'étape $H_5$, est alors comparable à celui décrit en liaison avec la figure 1a précédemment décrite dans la description mais que, toutefois, la transmission des informations diffusées sous la deuxième adresse de diffusion Multicast globale $ID_1g$ est effectuée non plus localement sur le seul site d'origine mais également sur le ou les sites distincts de l'entité multi-sites.

Un mode de mise en oeuvre particulier de l'étape $H_4$ consistant à transférer les informations à diffuser de la première à la deuxième adresse de diffusion sera maintenant décrit en liaison avec la figure 4b.

Le mode de mise en oeuvre précité concerne le cas particulier non limitatif dans lequel le site d'origine $S_1$ comprend un serveur de diffusion SD connecté au réseau IP par l'intermédiaire d'un routeur noté $R_{11}$ par exemple. Ce cas particulier correspond de manière avantageuse à la situation d'une entreprise multisite pour laquelle l'un des sites d'origine $S_1$ est muni d'un serveur de diffusion SD comportant un nombre important de clients, l'utilisation d'un routeur dans cette situation étant préférable.

En référence à la figure 4b, on indique que l'étape $H_4$ précitée peut alors comporter une étape $H_{41}$ de diffusion Multicast locale des informations à diffuser mémorisées à la première adresse $LMD_{1i}$ du serveur de diffusion vers le routeur $R_{11}$.

L'étape $H_{41}$ précitée est suivie d'une étape $H_{42}$ consistant en une étape de redirection des informations à diffuser $ID_{1i}$ par substitution de la deuxième adresse de diffusion Multicast globale $GMD_{1g}$ ou $GR_2$ à la première adresse de diffusion locale $LMD_{1i}$ constituant l'adresse de diffusion Multicast de groupe GR. On comprend en particulier que cette étape de redirection $H_{42}$ peut consister simplement à allouer aux informations diffusées localement $ID_{1i}$ la deuxième adresse de diffusion Multicast globale pour engendrer en fait les données mémorisées à la deuxième adresse de diffusion, notées $ID_{1g}$.

On comprend, en particulier, que l'étape de redirection précitée peut simplement consister à associer aux données mémorisées support de l'information à diffuser, mémorisées au niveau du routeur $R_{11}$, une structure de données simple comportant la première et la deuxième adresses, la structure de données pouvant consister simplement en une liste comprenant au moins la première et la deuxième adresse précitée ou par toute structure de données équivalente.

Compte tenu du mode opératoire du processus de diffusion Multicast étendue tel que décrit en figure 4a et 4b, on indique que, pour une pluralité de messages de requête de diffusion Multicast étendue, relative à une même première adresse de diffusion Multicast locale, émanant d'une pluralité de routeurs mobiles appartenant au site d'origine et interconnectées chacune au réseau IP sur un site distinct différent, l'étape $H_5$ consistant à transmettre par diffusion Multicast globale les informations à diffuser sous la deuxième adresse permet alors de créer un arbre de diffusion Multicast globale, dont l'élément racine est constitué par l'un des routeurs communs aux branches de diffusion constitutive de l'arbre de diffusion Multicast globale précité.

Toutefois, un mode de mise en oeuvre spécifique du processus de diffusion Multicast étendue peut être envisagé, ce mode de réalisation apparaissant particulièrement avantageux pour assurer une gestion cohérente des types de diffusion d'information Multicast locale respectivement globale et de l'espace mémoire finalement occupé dans ce but, tant au niveau du serveur de diffusion SD que du routeur $R_{11}$.

Selon le mode de mise en oeuvre particulièrement avantageux précité, la deuxième adresse de diffusion Multicast globale $GMD_{1g}$ peut être maintenue et validée pour une diffusion d'information Multicast locale $LMD_{1i}$ à la première adresse de manière permanente. La notion de diffusion d'information permanente s'entend du maintien de l'adresse globale tant qu'il existe des routeurs mobiles connectés en externe.

Dans ces conditions, on comprend que pour assurer le maintien et la validation permanente de la deuxième adresse de diffusion d'information Multicast globale $GMD_{1g}$, la structure de données, telle qu'une liste $[LMD_{1i}, GM_{1g}]$, est mémorisée et sécurisée de manière permanente au niveau du routeur, la première et la deuxième adresses étant ainsi mises en correspondance biunivoque de manière permanente.

Dans ces conditions, l'étape $H_4$ consistant à transférer des informations à diffuser de la première à la deuxième adresse de diffusion peut alors être supprimée pour tout message de requête de diffusion Multicast étendue à cette deuxième adresse, ultérieur au premier message de requête de diffusion Multicast IP étendue à la deuxième adresse précitée.

On comprend en particulier que la notion de suppression de l'étape $H_4$ concerne simplement la suppression du transfert physique des données mémorisées à la première adresse vers la deuxième adresse, ce transfert physique pouvant alors être simplement remplacé par l'appel de la deuxième adresse de diffusion d'information Multicast globale à partir de la structure de données permanentes précédemment mentionnée.

Pour une description plus détaillée du processus sui generis de discrimination du site de connexion vis-à-vis du site et/ou de l'organisation multisite d'origine respectivement du processus sui generis de diffusion Multicast globale étendue, on pourra utilement se reporter aux demandes de brevet français FR 03 09873 et FR 03 12688 déposées antérieurement respectivement le 12/08/2003 et le 29/10/2003 au nom de la demanderesse.

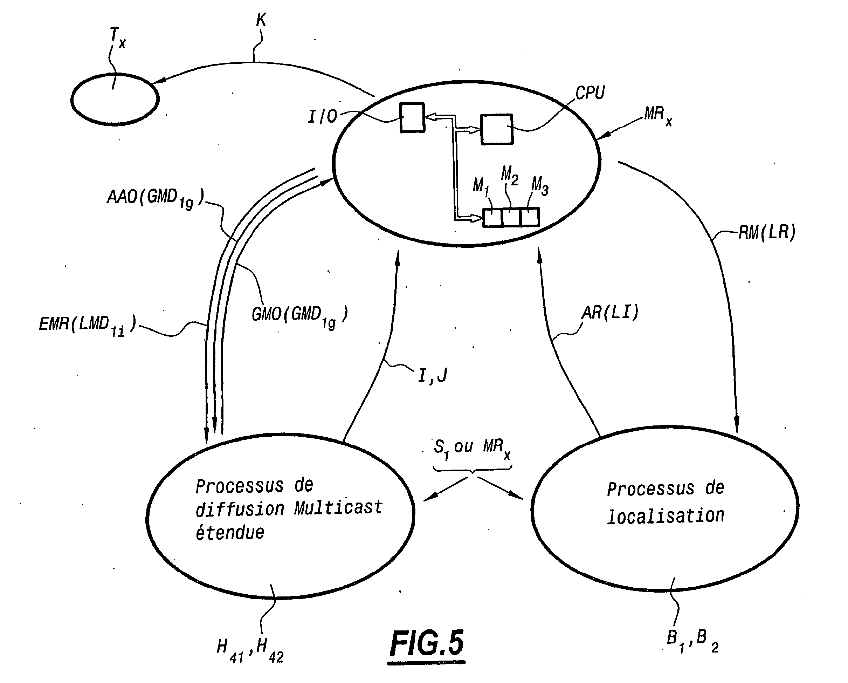

Une description plus détaillée d'un routeur mobile dédié conforme à l'objet de la présente invention, équipé des fonctions de contrôle et de transmission des requêtes d'accès de tout terminal utilisateur nomade connecté à un réseau IP mobile géré par ce dernier et permettant la mise en oeuvre du procédé objet de la présente invention sera maintenant donnée en liaison avec la figure 5.

De manière classique, le routeur mobile objet de l'invention est équipé des fonctions de contrôle et de transmission des requêtes d'accès, ainsi que mentionné précédemment et dispose bien entendu de ressources de traitement des données classiques telles qu'une unité centrale de traitement CPU, des organes d'entrée sortie I/O permettant la transmission et la réception de messages de type IP ainsi que des modules logiciels permettant de mettre en oeuvre les différentes fonctions telles que décrites précédemment dans la description en liaison avec les figures 2a à 4b.

Ainsi que représenté sur la figure 5, le routeur mobile $MR_x$ comporte au moins un module $M_1$ de discrimination du type de diffusion Multicast demandé par toute requête d'accès à une diffusion Multicast émise par un terminal nomade utilisateur demandeur $T_x$. Le module logiciel $M_1$ précité permet la mise en oeuvre du procédé objet de la présente invention, en particulier des étapes du processus de localisation sui generis tel que décrit précédemment dans la description en liaison avec les figures 2a, 2b et suivantes.

Le routeur mobile précité comporte en outre un module $M_2$ de substitution en fonction d'une variable de localisation de la connexion du routeur mobile à l'extérieur de son site d'origine ou de son organisation d'origine à toute requête de demande d'accès à une diffusion Multicast de groupe destinée au site d'origine et relative à une diffusion Multicast locale au site respectivement à l'organisation d'origine du terminal nomade d'une requête d'accès à une diffusion Multicast étendue permettant l'accès à la diffusion Multicast locale. Le module $M_2$ est un module logiciel permettant en fait l'exécution des étapes D à H de la figure 2a par exemple.

Il comporte également un module logiciel noté $M_3$ permettant d'effectuer la transformation de la diffusion Multicast étendue reçue du site d'origine du routeur mobile $MR_x$ en une diffusion Multicast transformée locale TMF (GR) à laquelle est substituée une adresse de source de diffusion Multicast transformée locale, l'adresse GR précitée. Le module logiciel $M_3$ permet en fait l'exécution des étapes J et K représentées en figures 2a et sur les figures suivantes.

On comprend en particulier que l'exécution de la transformation par l'intermédiaire du module logiciel $M_3$ peut avantageusement être effectuée par conservation des données de flux Multicast globales reçues et par substitution à l'adresse de la source de diffusion Multicast globale constitutive du processus de diffusion Multicast étendue d'une adresse de source de diffusion Multicast transformée locale c'est-à-dire l'adresse GR à l'étape J de la figure 2a.

En outre, le routeur mobile $MR_x$ dédié objet de la présente invention comprend bien sûr, par l'intermédiaire des organes d'entrée-sortie I/O des ressources de transmission et de réception de messages IP. Les ressources de réception assurent, ainsi que représentées sur la figure 5, au moins la réception de l'information de localisation du message d'offre d'accès, message AR (LI), la réception de la diffusion Multicast étendue par l'étape 1 de la figure 2a, puis de l'étape J1 de la figure 2b.

Les organes d'entrée-sortie (I/O) permettent également au moins la transmission du message de requête de diffusion d'information Multicast étendue, du message EMR ($LMD_{1i}$) du message d'acceptation d'offre d'accès AAO ($GMD_{1g}$).

Enfin, les ressources de transmission précitées permettent bien entendu la transmission du flux transformé de diffusion Multicast locale sur le réseau IP mobile vers au moins le terminal nomade utilisateur demandeur $T_x$ à l'étape K de la figure 2a, ainsi que représenté sur la figure 5.

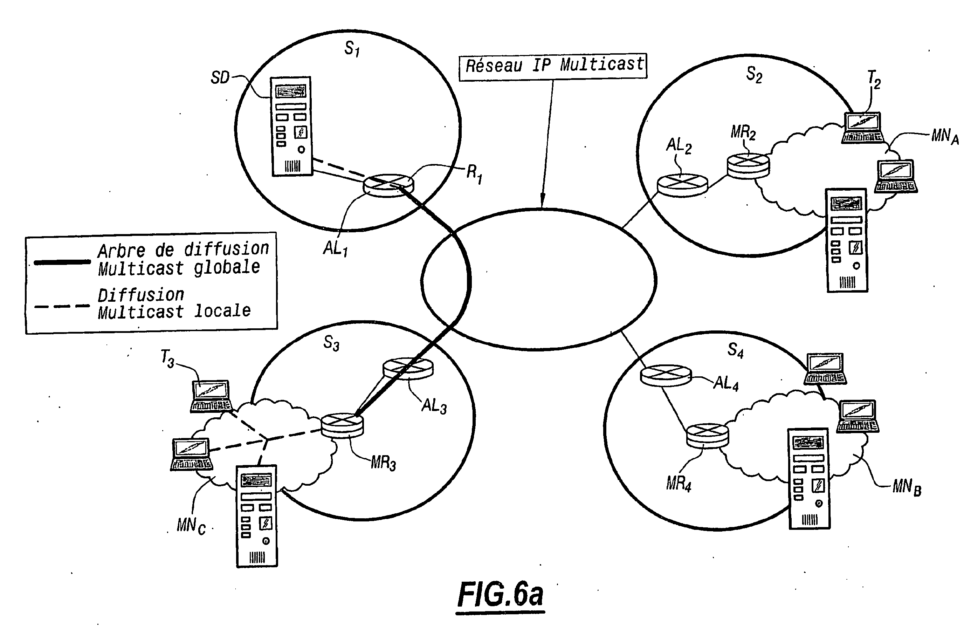

Une description plus détaillée du processus de mise en place d'un arbre de diffusion Multicast correspondant à la diffusion Multicast étendue sur le réseau d'interconnexion des sites à la demande des différents réseaux mobiles connectés sera maintenant donnée en liaison avec les figures 6a à 6c.

Outre la configuration spécifique du routeur mobile $MR_x$ telle que représentée en figure 5, on rappelle que ce dernier dispose explicitement de l'adresse de la machine contenant le nouvel agent logiciel sur son site d'origine, et en particulier du routeur d'accès du site d'origine. On comprend en particulier que pour exécuter la transmission du flux transformé de diffusion Multicast locale sur le réseau IP mobile vers au moins le terminal nomade utilisateur demandeur $T_x$, ainsi que décrit précédemment en liaison avec la figure 5 notamment, le routeur mobile $MR_x$ est muni d'un agent logiciel qui permet de modifier les paquets Multicast, de transmettre ces derniers sur le ou les réseaux mobiles concernés en diffusion Multicast locale selon le format adéquat.

De manière plus spécifique, on rappelle que pour accéder ou s'abonner à une diffusion locale à son site d'origine, tout routeur mobile $MR_x$ transmet non plus une requête d'abonnement classique MLD ou IGMP à son routeur d'accès mais au contraire une requête ou message tel que le message EMR ($LMD_{1i}$) représenté en figure 5.

L'agent logiciel placé sur le routeur d'accès du site d'origine, agent $AL_1$ sur le site $S_1$ de la figure 6a, déclenche alors la construction d'un arbre de diffusion Multicast entre le site d'origine $S_1$ et le routeur mobile, afin de transformer la diffusion locale étendue ainsi que décrit précédemment dans la description.

Le routeur mobile accède alors ou s'abonne à cette nouvelle diffusion Multicast puis la retransmet sur le réseau mobile auquel il est associé au format original de la diffusion locale par exemple.

En référence aux figures 6a à 6c, on indique que la source SD de la diffusion locale se trouve sur le site $S_1$. Trois routeurs mobiles $MR_2$, $MR_3$ et $MR_4$, sont en visite respectivement sur les sites $S_2$, $S_3$ et $S_4$. $AL_1$ désigne l'agent logiciel placé sur le routeur d'accès $R_1$ du site d'origine, lequel gère la mobilité des routeurs mobiles précités. AL, AL et AL désignent respectivement les agents logiciels embarqués sur chacun des routeurs mobiles $MR_2$, $MR_3$ et $MR_4$ chargés de gérer les abonnements Multicast en situation de mobilité ainsi que le relais des flux Multicast vers les terminaux nomades connectés au réseau IP mobile correspondant.

Les différentes situations représentées aux figures 6a à 6c sont les suivantes :

Le terminal nomade $T_3$ du réseau mobile $MN_c$ souhaite accéder à la diffusion locale au site $S_1$, son propre site d'origine dont l'adresse est $G_1$.

Le terminal nomade $T_3$ transmet une requête IGMP ou MLD vers son routeur par défaut, le routeur mobile $MR_3$.

La fonction désignée "proxy MLD" ou "proxy IGMP" de $MR_3$ recherche l'accès à la diffusion locale au site $S_1$, son propre site d'origine dont l'adresse est G1.

Le routeur mobile $MR_3$ a procédé auparavant à la localisation de sa connexion, ainsi que décrit précédemment dans la description, et déterminé que l'adresse Multicast de la diffusion correspond à une diffusion privée limitée au site d'origine $S_1$.

En conséquence, il transmet non pas le message de requête d'accès MLD ou IGMP mais au contraire le message EMR ($LMD_{1i}$) à l'agent logiciel $AL_1$ implanté sur le routeur d'accès de son site d'origine $S_1$. Le message précité comporte l'adresse $G_1$ de la diffusion pour laquelle l'accès est demandé.

L'agent logiciel $AL_1$ de $S_1$ reçoit le message, identifie le routeur mobile $MR_3$ et transmet l'offre d'accès à la diffusion Multicast étendue dont l'adresse est la deuxième adresse substituée $G_2$ ou adresse $GMD_{1g}$ de la figure 5.

Cette adresse est une adresse correspondant à une diffusion Multicast globale dont le routeur d'accès $R_1$ sur le site $S_1$ est identifié comme étant la source.

Après transmission par le routeur mobile $MR_3$, l'acceptation d'offre d'accès par le message AAO ($GMD_{1g}$) par l'intermédiaire d'un message d'accès ou d'abonnement de type MLD ou IGMP est transmise au routeur d'accès du site $S_1$ et à l'agent logiciel $AL_1$. La diffusion correspondante Multicast étendue est ensuite propagée à travers le réseau d'interconnexions.

Conjointement, le routeur d'accès $R_1$ au site $S_1$ qui héberge l'agent logiciel $AL_1$ s'abonne lui-même à la diffusion Multicast locale à l'adresse $G_1$ limitée au site, afin d'en recevoir les données. Suite à la réception du message d'acceptation d'offre d'accès AAO ($GMD_{1G}$), les données de la diffusion Multicast locale à l'adresse $G_1$ sont mises à disposition de la diffusion Multicast globale à l'adresse $G_2$ et ainsi transmises hors du site d'origine $S_1$.

L'agent logiciel $AL_3$ implanté sur le routeur mobile $RM_3$ en visite sur le site $S_3$ reçoit alors les données de la diffusion locale au site $S_1$ d'adresse $G_1$, via la diffusion globale, c'est-à-dire par l'intermédiaire de la diffusion Multicast étendue, à l'adresse $G_2$.

L'agent logiciel $AL_3$ procède alors à la transformation du flux Multicast global en flux Multicast transformé local qui est transmis sur le réseau mobile $MN_c$, les terminaux nomades, en particulier le terminal nomade $T_3$, recevant la diffusion Multicast locale à l'adresse $G_1$, les mécanisme de mise en oeuvre étant toutefois complètement transparents pour ces derniers.

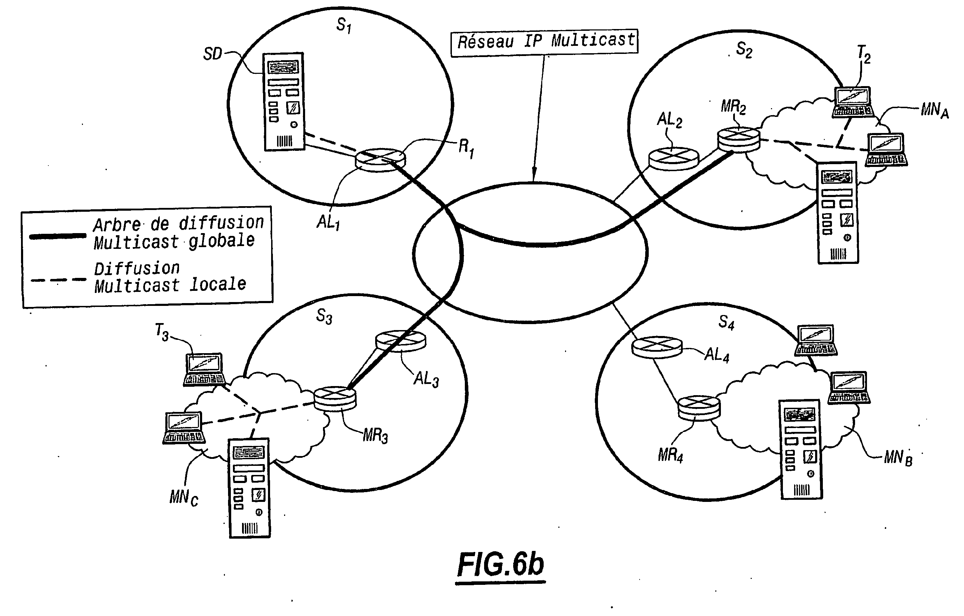

En référence à la figure 6b, on considère maintenant un terminal nomade $T_2$ du réseau mobile $MN_A$ en visite sur le site $S_2$ prévoyant d'accéder à la même diffusion locale du site $S_1$ d'adresse $G_1$. Le terminal $T_2$ transmet donc une requête IGMP ou MLD vers son routeur par défaut, le routeur mobile $MR_2$ de la figure 6b.

La fonction "proxy MLD" OU "proxy IGMP" du routeur mobile précité cherche à accéder à la même diffusion locale au site d'origine $S_1$ dont l'adresse est $G_1$.

Le routeur mobile $MR_2$ a détecté auparavant sa localisation et a vérifié que l'adresse Multicast de la diffusion demandée correspond à une diffusion limitée au site d'origine $S_1$. Il transmet non pas un message d'abonnement MLD ou IGMP; message envoyé dans le cas où la diffusion demandée est une diffusion globale, mais au contraire un message à l'agent logiciel $AL_1$ implanté sur le routeur d'accès de son site d'origine, routeur R1. Ce message contient bien entendu l'adresse $G_1$ de la diffusion demandée.

L'agent logiciel $AL_1$ du site $S_1$ reçoit le message de demande précité. Après identification du routeur mobile $MR_2$, la réponse transmise à ce dernier permet de communiquer l'adresse de diffusion globale dont l'adresse est $G_2$.

La diffusion Multicast étendue correspondante étant déjà en cours, aucune autre action n'est à mener par le routeur d'accès $R_1$ du site d'origine $S_1$.

Le routeur mobile $MR_2$ ayant reçu cette réponse, il accède normalement à la diffusion Multicast globale d'adresse $G_2$ en transmettant un message d'abonnement MLD ou IGMP à son routeur d'accès du site d'origine $R_1$. La diffusion Multicast globale d'adresse $G_2$ étant déjà en cours sur le réseau d'interconnexions des sites, une nouvelle branche de l'arbre de diffusion Multicast globale est créée, ainsi que représentée en figure 6b, et le routeur mobile $MR_2$ reçoit alors les données de la diffusion locale au site $S_1$ d'adresse $G_1$ via la diffusion Multicast étendue, c'est-à-dire la diffusion Multicast globale d'adresse $G_2$.

L'agent logiciel $AL_2$ implanté sur le routeur mobile $MR_2$ en visite sur le site $S_2$ reçoit alors les données de la diffusion locale au site $S_1$ d'adresse $G_1$ par l'intermédiaire de la diffusion globale d'adresse $G_2$ et met alors les données de la diffusion globale d'adresse $G_2$ dans la diffusion Multicast locale d'adresse $G_1$ qui elle, est transmise sur le réseau mobile $MN_A$, en particulier vers le terminal utilisateur demandeur $T_2$.

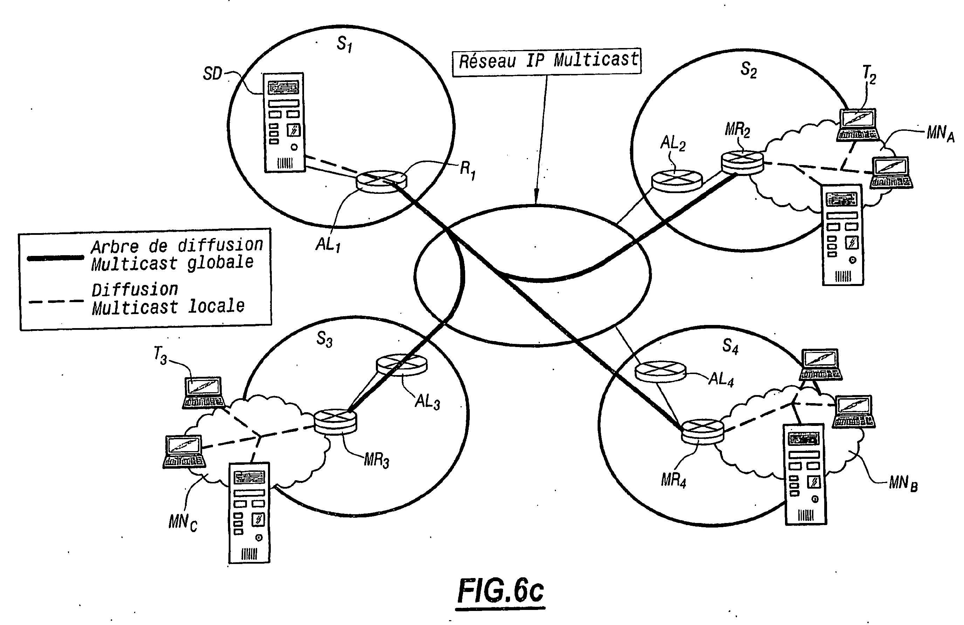

Enfin, en référence à la figure 6c, on considère maintenant la situation selon laquelle un réseau mobile $MN_B$ est en visite sur le site $S_4$ et souhaite s'abonner à la même diffusion locale au site $S_1$ d'adresse $G_1$. Le routeur mobile $MR_4$ correspondant transmet sa requête d'accès à l'agent logiciel $AL_1$ du site d'origine $S_1$, s'abonne à la diffusion Multicast étendue exécutée par la diffusion Multicast locale d'adresse $G_2$ et retransmet en local sur le réseau mobile $MN_B$ la diffusion locale Multicast d'adresse $G_1$, ainsi que mentionné précédemment. L'état de l'arbre de diffusion Multicast est représenté à la figure 6c pour l'ensemble.

On comprend ainsi que la diffusion reste une diffusion Multicast globale depuis la source c'est-à-dire du serveur de diffusion SB jusqu'au récepteur final, c'est-à-dire chacun des routeurs mobiles $MR_3$, $MR_2$ et $MR_4$, sans utilisation de tunnels Unicast ni, bien entendu, de duplication systématique des données diffusées.

Pour chaque diffusion faisant l'objet d'une demande de la part d'un réseau mobile quelconque, il y a donc création d'un arbre de diffusion Multicast sur l'ensemble du réseau d'interconnexions.

## Revendications

1. Procédé de diffusion Multicast vers au moins un terminal nomade (T) utilisateur d'un réseau IP mobile, par l'intermédiaire d'un routeur mobile équipé de fonctions de contrôle et de transmission des accès de tout terminal utilisateur à toute diffusion du type Multicast, **caractérisé en ce que**, suite à une connexion dudit routeur mobile au réseau IP, et à la transmission d'un message de signalisation (RM(LR)) de ce routeur mobile (MN) vers son site d'origine (S1), celui-ci consiste au moins à :

   - au niveau dudit site d'origine,

      • •discriminer la localisation dudit routeur mobile vis-à-vis de son site d'origine respectivement de son organisation d'origine, à partir dudit message reçu de signalisation (RM(LR));
      • • transmettre audit routeur mobile une information de discrimination de localisation (LI) ; et

   - au niveau dudit routeur mobile, pour toute demande d'un terminal nomade utilisateur demandeur du réseau IP mobile d'accès à une diffusion Multicast de groupe destinée au site d'origine et relative à une diffusion Multicast locale au site respectivement à l'organisation d'origine dudit terminal nomade,

      • • substituer à ladite demande d'accès, lorsque ladite information de discrimination de localisation désigne une connexion dudit routeur mobile à l'extérieur de son site d'origine respectivement de son organisation d'origine, une requête d'accès à une diffusion Multicast étendue (AR(GR2)) permettant l'accès à ladite diffusion Multicast locale ;
      • • transmettre, vers ledit site d'origine, ladite requête d'accès à ladite diffusion Multicast étendue ;
      • • recevoir et transformer ladite diffusion Multicast étendue en une diffusion Multicast transformée locale au niveau dudit routeur mobile ;
      • • transmettre ladite diffusion Multicast transformée locale sur ledit réseau IP mobile vers au moins ledit terminal nomade utilisateur demandeur.

2. Procédé selon la revendication 1, **caractérisé en ce que** les étapes de discrimination et de transmission exécutées au niveau du site d'origine sont remplacées, au niveau dudit routeur mobile, par une étape consistant à exécuter une procédure de localisation de la connexion dudit routeur mobile pour engendrer une variable de localisation représentative de la position de la connexion dudit routeur mobile vis-à-vis de son site d'origine, de son organisation d'origine ou de l'Internet public.

**3.** Procédé selon la revendication 1 ou 2, **caractérisé en ce que**, sur requête d'accès d'un terminal nomade utilisateur demandeur dudit réseau IP mobile à une diffusion Multicast à une première adresse de diffusion Multicast, préalablement à la transmission de cette requête d'accès par ledit routeur mobile, celui-ci consiste au moins à :

- discriminer le type de diffusion Multicast fourni par l'accès à ladite première adresse ; et,

- • si ladite première adresse est une adresse de diffusion Multicast globale,
- • • transmettre directement ladite requête d'accès à ladite première adresse, par transmission par ledit routeur mobile d'un message de requête d'accès classique ; sinon,
- • si ladite première adresse est une adresse de diffusion locale à l'organisation d'origine dudit terminal utilisateur demandeur,
- • • discriminer, à partir de ladite variable de localisation, la position de la connexion dudit routeur mobile, et, en fonction de la localisation de cette connexion ;
- • • • si ledit routeur mobile se trouve connecté sur un réseau appartenant à son organisation d'origine,
- • • • • transmettre directement ladite requête d'accès à ladite première adresse, par transmission d'un message de requête d'accès classique ; sinon ;
- • • • si ledit routeur mobile se trouve connecté sur un réseau n'appartenant pas à son organisation d'origine,
- • • • • transmettre, du routeur mobile vers la machine du site d'origine du terminal nomade utilisateur demandeur gérant les accès de terminaux nomades en déplacement, un message de requête d'accès distant à une deuxième adresse de diffusion Multicast globale accessible à l'adresse de localisation dudit routeur mobile ; et, suite à la réception par ledit routeur mobile de ladite deuxième adresse, s'abonner au flux de diffusion Multicast globale émanant de ladite deuxième adresse ;
- • • • • transformer le flux de diffusion Multicast globale reçu de ladite deuxième adresse en un flux transformé de diffusion Multicast locale, accessible localement au niveau dudit réseau IP mobile à ladite première adresse ; et
- • • • • transmettre le flux transformé de diffusion Multicast locale dudit routeur mobile vers au moins ledit terminal nomade utilisateur demandeur.

**4.** Procédé selon la revendication 3, **caractérisé en ce que**

- • si ladite première adresse est une adresse de diffusion locale au site d'origine dudit terminal nomade utilisateur demandeur, celui-ci consiste en outre à :
- • • discriminer, à partir de ladite variable de localisation, la position de la connexion dudit routeur mobile, et, en fonction de la localisation de cette connexion ;
- • • • si ledit routeur mobile est connecté sur un réseau appartenant à son site d'origine,
- • • • • transmettre directement ladite requête d'accès à ladite première adresse, par transmission d'un message de requête d'accès classique ; sinon ;
- • • si ledit routeur mobile se trouve connecté sur un autre réseau n'appartenant pas à son site d'origine,
- • • • • transmettre, du routeur mobile vers la machine du site d'origine du terminal nomade utilisateur demandeur, gérant les accès de terminaux nomades en déplacement, un message de requête d'accès distant à une deuxième adresse de diffusion Multicast globale accessible à l'adresse de localisation dudit routeur mobile ; et, suite à la réception par ledit routeur mobile de ladite deuxième adresse, s'abonner au flux de diffusion Multicast globale émanant de la deuxième adresse ;
- • • • • transformer le flux de diffusion Multicast globale reçu de ladite deuxième adresse en un flux transformé de diffusion Multicast locale, accessible localement au niveau dudit réseau IP mobile à ladite première adresse ; et,
- • • • • transmettre le flux transformé de diffusion Multicast locale dudit routeur mobile vers au moins ledit terminal nomade utilisateur demandeur.

**5.** Procédé selon la revendication 3 ou 4, **caractérisé en ce que** ledit message de requête d'accès distant transmis par ledit routeur mobile est une requête d'accès à une diffusion Multicast étendue formée soit par un message de requête de diffusion Multicast globale, soit par un message de requête de diffusion Multicast locale à l'organisation d'origine dudit terminal nomade utilisateur demandeur.

**6.** Procédé selon l'une des revendications 1 à 5, **caractérisé en ce que** pour un routeur mobile susceptible d'opérer dans et/ou hors de son réseau de rattachement d'origine, audit routeur mobile étant allouées par ledit site de rattachement d'origine une adresse permanente interne pour toute connexion en réseau de ce routeur mobile sur un site appartenant à ce réseau de rattachement d'origine, une adresse temporaire interne pour toute connexion en réseau de ce terminal sur un autre site, appartenant à cette organisation d'origine, et, par tout site quelconque n'appartenant pas à ladite organisation d'origine, une adresse temporaire externe pour toute connexion en réseau dudit routeur mobile sur ledit site quelconque, lesdites adresses formant, pour ledit routeur mobile, une référence de localisation, ladite étape consistant à discriminer la localisation dudit routeur mobile vis-à-vis de son site respectivement de son organisation d'origine X consiste au moins à :

- comparer, pour identification, ladite référence de localisation aux valeurs d'adresses de l'un au moins des ensembles formés par l'ensemble des adresses permanentes internes allouées à l'ensemble des routeurs mobiles rattachés à ce réseau de rattachement d'origine et susceptibles d'opérer dans ce réseau de rattachement d'origine et par l'ensemble des adresses temporaires internes allouées à cet ensemble de routeurs mobiles pour toute connexion sur un autre site appartenant à ladite organisation d'origine ; et
- établir au moins ladite information de discrimination de localisation dudit routeur mobile désignant soit la connexion dudit routeur mobile sur son réseau de rattachement d'origine, sur identification de ladite référence de localisation dans l'ensemble des adresses permanentes internes, soit la connexion dudit routeur mobile en réseau sur un autre site appartenant à ladite organisation d'origine, sur identification de ladite référence de localisation dans l'ensemble des adresses temporaires internes, ou encore la connexion dudit terminal nomade en réseau sur un site quelconque n'appartenant pas à ladite organisation d'origine, en l'absence d'identification de ladite référence de localisation dans l'un et l'autre ensemble des adresses permanentes internes, ensemble des adresses temporaires internes.

7. Procédé selon l'une des revendications 5 ou 6, **caractérisé en ce que** l'étape consistant à transmettre une requête d'accès à une diffusion Multicast étendue à partir d'une diffusion d'information Multicast locale à l'organisation respectivement au site d'origine dudit terminal nomade, cette diffusion Multicast locale étant engendrée par une source de diffusion d'information implantée à une première adresse de diffusion d'information Multicast locale dans ce site d'origine, consiste à :

- transmettre dudit routeur mobile vers ledit site d'origine un message de requête de diffusion d'information Multicast étendue, contenant au moins ladite première adresse de diffusion d'information Multicast locale et un code d'identification dudit routeur mobile ; et, suite à l'identification dudit routeur mobile par ledit site d'origine ;
- transmettre, dudit site d'origine vers ledit routeur mobile, un message d'offre d'accès comprenant au moins une deuxième adresse de diffusion d'information Multicast globale, dont la source de diffusion est identifiée dans ledit site d'origine ; et, suite à la réception dudit message d'offre d'accès par ledit routeur mobile ;
- transmettre dudit routeur mobile vers ledit site d'origine, un message d'acceptation d'offre d'accès aux informations en diffusion à ladite deuxième adresse de diffusion d'information Multicast globale ; et, après réception du message d'acceptation d'offre d'accès au niveau dudit site d'origine,
- transférer les informations à diffuser de la première à la deuxième adresse de diffusion ; et
- transmettre, par diffusion Multicast globale les informations à diffuser sous la deuxième adresse, ce qui permet audit routeur mobile interconnecté sur un site n'appartenant pas audit site respectivement à ladite organisation d'origine de recevoir, sur ledit site, lesdites informations en diffusion sous la première adresse en diffusion Multicast locale, diffusées sous la deuxième adresse en diffusion Multicast globale.

8. Routeur mobile équipé des fonctions de contrôle et de transmission des requêtes d'accès de tout terminal utilisateur nomade connecté à un réseau IP mobile géré par ledit routeur mobile, ce réseau mobile comportant au moins un terminal nomade utilisateur interconnecté à ce réseau IP mobile, **caractérisé en ce qu'**il comporte au moins :

- des moyens de discrimination du type de diffusion Multicast demandée par toute requête d'accès à une diffusion Multicast émise par ledit terminal nomade utilisateur demandeur ;
- des moyens de substitution en fonction d'une variable de localisation de la connexion dudit routeur mobile à l'extérieur de son site d'origine respectivement de son organisation d'origine à toute requête de demande d'accès à une diffusion Multicast de groupe destinée au site d'origine et relative à une diffusion Multicast locale au site respectivement à l'organisation d'origine dudit terminal nomade, d'une requête d'accès à une diffusion Multicast étendue permettant l'accès à ladite diffusion Multicast locale ;
- des moyens de transformation de toute diffusion Multicast étendue reçue en une diffusion Multicast transformée locale.

9. Routeur mobile selon la revendication 8, **caractérisé en ce que** lesdits moyens de transformation de ladite diffusion Multicast étendue reçue en une diffusion Multicast transformée locale comprennent des moyens de substitution de l'adresse de diffusion Multicast globale à laquelle est substituée une adresse de diffusion Multicast transformée locale.

**10.** Routeur mobile selon l'une des revendications 8 ou 9, **caractérisé en ce que** celui-ci comprend des moyens de transmission et de réception de messages IP, lesdits moyens de réception assurant au moins la réception de l'information de localisation du message d'offre d'accès, de la diffusion Multicast étendue, lesdits moyens de transmission assurant au moins la transmission dudit message de requête de diffusion d'information Multicast étendue, du message d'acceptation d'offre d'accès, du flux transformé de diffusion Multicast locale sur le réseau IP mobile vers au moins le terminal nomade utilisateur demandeur.

**11.** Produit de programme enregistré sur un support de mémorisation et exécutable par un ordinateur sous forme d'un agent logiciel, **caractérisé en ce qu'**il comporte au moins un module logiciel agencé pour :

- • • recevoir une information de discrimination de localisation ;
- • • substituer à une demande d'accès par un terminal nomade utilisateur demandeur de réseau IP, lorsque ladite information de discrimination de localisation désigne une connexion de routeur mobile à l'extérieur de son site d'origine respectivement de son organisation d'origine, une requête d'accès à une diffusion Multicast étendue permettant l'accès à une diffusion Multicast locale ;
- • • transmettre, vers ledit site d'origine, ladite requête d'accès à ladite diffusion Multicast étendue ;
- • • recevoir et transformer ladite diffusion Multicast étendue en une diffusion Multicast transformée locale au niveau dudit routeur mobile ; et
- • • transmettre ladite diffusion Multicast transformée locale sur ledit réseau IP mobile vers au moins ledit terminal nomade utilisateur demandeur.

**12.** Produit de programme selon la revendication 11, **caractérisé en ce que** ledit module logiciel de transformation comporte au moins un module de substitution de l'adresse de diffusion Multicast globale à laquelle est substituée une adresse de diffusion Multicast transformée locale.

## Claims

**1.** Method for multicast broadcasting towards at least one roaming user terminal (T) in a mobile IP network, via a mobile router equipped with control and transmission functions for accesses from any user terminal to any multicast-type broadcast, **characterized in that**, following a connection of said mobile router to the IP network, and the transmission of a signalling message (RM(LR)) from this mobile router (MN) to its original site (S1), said method consists in at least:

- in said original site,

  • • discriminating the location of said mobile router with respect to its original site, respectively its original organization, from said received signalling message (RM(LR));
  • • transmitting to said mobile router a location discrimination indication (LI); and

- in said mobile router, for any request from a roaming user terminal requesting from the mobile IP network access to a group multicast broadcast intended for the original site and relating to a multicast broadcast local to the original site, respectively original organization, of said roaming terminal,

  • • replacing said access request, when said location discrimination indication designates a connection of said mobile router to the exterior of its original site, respectively of its original organization, with a request to access an extended multicast broadcast (AR(GR2)) allowing access to said local multicast broadcast;
  • • transmitting, to said original site, said request to access said extended multicast broadcast;
  • • receiving and converting said extended multicast broadcast into a converted local multicast broadcast in said mobile router;
  • • transmitting said converted local multicast broadcast over said mobile IP network towards at least said requesting roaming user terminal.

**2.** Method according to Claim 1, **characterized in that** the discrimination and transmission steps executed on the original site are replaced, on said mobile router, with a step consisting in executing a procedure for locating the connection of said mobile router to generate a location variable representative of the position of the connection of said mobile router with respect to its original site, to its original organization or to the public Internet.

**3.** Method according to Claim 1 or 2, **characterized in that**, on request from a requesting roaming user terminal in said mobile IP network for access to a multicast broadcast at a first multicast broadcast address, prior to the transmission of this access request by said mobile router, said method consists in at least:

- discriminating the type of multicast broadcast supplied by the access to said first address; and,
- • if said first address is a global multicast broadcast address,
- • • directly transmitting said access request to said first address, by transmission by said mobile router of a conventional access request message; otherwise,
- • if said first address is a broadcast address local to the original organization of said requesting user terminal,
- • • discriminating, from said location variable, the position of the connection of said mobile router, and, depending on the location of this connection;
- • • • if said mobile router is connected to a network belonging to its original organization,
- • • • • directly transmitting said access request to said first address, by transmission of a conventional access request message; otherwise;
- • • • if said mobile router is connected to a network that does not belong to its original organization,
- • • • • transmitting, from the mobile router to the machine of the original site of the requesting roaming user terminal managing accesses from roaming terminals that are moving around, a remote access request message to a second global multicast broadcast address that is accessible to the location address of said mobile router; and, following the receipt by said mobile router of said second address, subscribing to the global multicast broadcast stream emanating from said second address;
- • • • • converting the global multicast broadcast stream received from said second address into a converted local multicast broadcast stream, locally accessible in said mobile IP network at said first address; and
- • • • • transmitting the converted local multicast broadcast stream from said mobile router to at least said requesting roaming user terminal.

**4.** Method according to Claim 3, **characterized in that**

- • if said first address is a broadcast address local to the original site of said requesting roaming user terminal, said method also consists in:
- • • discriminating, from said location variable, the position of the connection of said mobile router, and, depending on the location of this connection;
- • • • if said mobile router is connected to a network belonging to its original site,
- • • • • directly transmitting said access request to said first address, by transmission of a conventional access request message; otherwise;
- • • • if said mobile router is connected to another network not belonging to its original site,
- • • • • transmitting, from the mobile router to the machine of the original site of the requesting roaming user terminal managing accesses from roaming terminals that are moving around, a remote access request message to a second global multicast broadcast address accessible to the location address of said mobile router; and, following the receipt by said mobile router of said second address, subscribing to the global multicast broadcast stream emanating from the second address;
- • • • • converting the global multicast broadcast stream received from said second address into a converted local multicast broadcast stream, locally accessible in said mobile IP network at said first address; and,
- • • • • transmitting the converted local multicast broadcast stream from said mobile router to at least said requesting roaming user terminal.

**5.** Method according to Claim 3 or 4, **characterized in that** said remote access request message transmitted by said mobile router is a request to access an extended multicast broadcast formed either by a global multicast broadcast request message, or by a multicast broadcast request message local to the original organization of said requesting roaming user terminal.

**6.** Method according to one of Claims 1 to 5, **characterized in that**, for a mobile router that is able to work inside and/or outside its original home network, said mobile router being allocated, by said original home site, an internal permanent address for any network connection of this mobile router to a site belonging to this original home network, an internal temporary address for any network connection of this terminal to another site, belonging to this original organization, and, by any site not belonging to said original organization, an external temporary address for any network connection of said mobile router to said any site, said addresses forming, for said mobile router, a location reference, said step consisting in discriminating the location of said mobile router with respect to its original site, respectively original organization, consists at least in:

- comparing, for identification, said location reference to the address values of at least one of the sets formed by the set of internal permanent addresses allocated to all the mobile routers attached to this original home network and able to work in this original home network and by the set of internal temporary addresses allocated to this set of mobile routers for any connection to another site belonging to said original organization; and

- establishing at least said location discrimination indication of said mobile router designating either the connection of said mobile router to its original home network, upon identification of said location reference among the set of internal permanent addresses, or the network connection of said mobile router to another site belonging to said original organization, upon identification of said location reference among the set of internal temporary addresses, or even the network connection of said roaming terminal to any site not belonging to said original organization, in the absence of identification of said location reference in one or other of the set of internal permanent addresses and the set of internal temporary addresses.

7.  Method according to one of Claims 5 or 6, **characterized in that** the step consisting in transmitting a request to access an extended multicast broadcast from a multicast information broadcast local to the original organization, respectively original site, of said roaming terminal, this local multicast broadcast being generated by an information broadcasting source located at a first local multicast information broadcast address in this original site, consists in:

    - transmitting, from said mobile router to said original site, an extended multicast information broadcast request message, containing at least said first local multicast information broadcast address and an identification code of said mobile router; and, following the identification of said mobile router by said original site;
    - transmitting, from said original site to said mobile router, an access offer message comprising at least one second global multicast information broadcast address, the broadcast source of which is identified in said original site; and, following the receipt of said access offer message by said mobile router;
    - transmitting, from said mobile router to said original site, a message accepting the offer to access the information being broadcast at said second global multicast information broadcast address; and, after receipt of the access offer acceptance message at said original site,
    - transferring the information to be broadcast from the first to the second broadcast address; and
    - transmitting, by global multicast broadcast, the information to be broadcast under the second address, which enables said mobile router interconnected on a site not belonging to said original site, respectively said original organization, to receive, on said site, said information being broadcast under the first address in local multicast broadcast mode, broadcast under the second global multicast broadcast address.

8.  Mobile router equipped with control and transmission functions for access requests from any roaming user terminal connected to a mobile IP network managed by said mobile router, this mobile network including at least one roaming user terminal interconnected with this mobile IP network, **characterized in that** it comprises at least:

    - means for discriminating the type of multicast broadcast requested by any multicast broadcast access request sent by said requesting roaming user terminal;
    - means for replacing, according to a location variable of the connection of said mobile router to the outside of its original site, respectively of its original organization, any request to access a group multicast broadcast intended for the original site and relating to a multicast broadcast local to the original site, respectively original organization, of said roaming terminal, with a request to access an extended multicast broadcast allowing access to said local multicast broadcast;
    - means for converting any received extended multicast broadcast into a local converted multicast broadcast.

9.  Mobile router according to Claim 8, **characterized in that** said means for converting said received extended multicast broadcast into a local converted multicast broadcast comprise means for replacing the global multicast broadcast address, which is replaced with a local converted multicast broadcast address.

10. Mobile router according to one of Claims 8 or 9, **characterized in that** the latter comprises means for transmitting and receiving IP messages, said reception means handling at least the reception of the access offer message location information, of the extended multicast broadcast, said transmission means handling at least the transmission of said extended multicast information broadcast request message, of the access offer acceptance message, of the converted local multicast broadcast stream over the mobile IP network towards at least the requesting roaming user terminal.

11. Program product stored on a storage medium and executable by a computer in the form of a software agent, **characterized in that** it comprises at least a software module designed to:

- • • receive a location discrimination indication;
- • • replace an access request by a requesting roaming user terminal of the IP network, when said location discrimination indication designates a mobile router connection outside its original site, respectively its original organization, with an extended multicast broadcast access request allowing access to a local multicast broadcast;
- • • transmitting, to said original site, said request to access said extended multicast broadcast;
- • • receiving and converting said extended multicast broadcast into a local converted multicast broadcast in said mobile router; and
- • • transmitting said local converted multicast broadcast over said mobile IP network towards at least said requesting roaming user terminal.

**12.** Program product according to Claim 11, **characterized in that** said conversion software module includes at least one module for replacing the global multicast broadcast address, which is replaced with a local converted multicast broadcast address.

**Patentansprüche**

**1.** Verfahren zur Multicast-Verbreitung an mindestens ein nomadisches Endgerät (T), das Benutzer eines mobilen IP-Netzwerks ist, über einen mobilen Router, der mit Überwachungs- und Übertragungsfunktionen der Zugriffe jedes Benutzerendgeräts auf jede Verbreitung von der Art Multicast ausgestattet ist, **dadurch gekennzeichnet, dass** nach einer Verbindung des mobilen Routers mit dem IP-Netzwerk und nach der Übertragung einer Signalisierungsmitteilung (RM(LR)) dieses mobilen Routers (MN) an seinen Ursprungsstandort (S1), dieses mindestens darin besteht:

- auf der Ebene des Ursprungsstandorts,

• • die Lokalisierung des mobilen Routers gegenüber seinem Ursprungsstandort bzw. seiner Ursprungsorganisation ausgehend von der empfangenen Signalisierungsmitteilung (RM(LR)) zu unterscheiden;
• • an den mobilen Router eine LokalisierungsUnterscheidungsinformation (LI) zu übertragen; und

- auf der Ebene des mobilen Routers, für jede Zugriffsanforderung von einem anfordernden nomadischen Benutzerendgerät des mobilen IP-Netzwerks auf eine Multicast-Gruppenverbreitung, die für den Ursprungsstandort bestimmt ist und sich auf eine lokale Multicast-Verbreitung am Ursprungsstandort bzw. auf die Ursprungsorganisation des nomadischen Endgeräts bezieht,

• • wenn die LokalisierungsUnterscheidungsinformation eine Verbindung des mobilen Routers außerhalb seines Ursprungsstandorts bzw. seiner Ursprungsorganisation bezeichnet, die Zugriffsanforderung durch eine Zugriffsanforderung auf eine erweiterte Multicast-Verbreitung (AR(GR2)) zu ersetzen, die den Zugriff auf die lokale Multicast-Verbreitung erlaubt;
• • die Zugriffsanforderung auf die erweiterte Multicast-Verbreitung an den Ursprungsstandort zu übertragen;
• • auf der Ebene des mobilen Routers die erweiterte Multicast-Verbreitung zu empfangen und in eine lokale umgewandelte Multicast-Verbreitung umzuwandeln;
• • die lokale umgewandelte Multicast-Verbreitung über das mobile IP-Netzwerk mindestens an das anfordernde nomadische Benutzerendgerät zu übertragen.

**2.** Verfahren nach Anspruch 1, **dadurch gekennzeichnet, dass** die Schritte der Unterscheidung und der Übertragung, die auf der Ebene des Ursprungsstandorts ausgeführt werden, auf der Ebene des mobilen Routers durch einen Schritt ersetzt werden, der darin besteht, eine Lokalisierungsprozedur der Verbindung des mobilen Routers auszuführen, um eine Lokalisierungsvariable zu erzeugen, die für die Position der Verbindung des mobilen Routers bezüglich seines Ursprungsstandorts, seiner Ursprungsorganisation oder des öffentlichen Internets repräsentativ ist.

**3.** Verfahren nach Anspruch 1 oder 2, **dadurch gekennzeichnet, dass** auf Zugriffsanforderung eines anfordernden nomadischen Benutzerendgeräts des mobilen IP-Netzwerks auf eine Multicast-Verbreitung an eine erste Multicast-Verbreitungsadresse vor der Übertragung dieser Zugriffsanforderung durch den mobilen Router dieses mindestens darin besteht:

- die Art von Multicast-Verbreitung, die vom Zugriff auf die erste Adresse geliefert wird, zu unterscheiden; und
- • wenn die erste Adresse eine globale Multicast-Verbreitungsadresse ist,

- • • die Zugriffsanforderung durch Übertragung einer klassischen Zugriffsanforderungsmitteilung durch den mobilen Router direkt an die erste Adresse zu übertragen; sonst,

- • wenn die erste Adresse eine lokale Verbreitungsadresse in der Ursprungsorganisation des anfordernden Benutzerendgeräts ist,

- • • ausgehend von der Lokalisierungsvariablen die Position der Verbindung des mobilen Routers zu unterscheiden, und abhängig von der Lokalisierung dieser Verbindung;

- • • • wenn der mobile Router mit einem Netz verbunden ist, das zu seiner Ursprungsorganisation gehört,

- • • • • die Zugriffsanforderung durch Übertragung einer klassischen Zugriffsanforderungsmitteilung direkt an die erste Adresse zu übertragen; sonst;

- • • • wenn der mobile Router mit einem Netz verbunden ist, das nicht zu seiner Ursprungsorganisation gehört,

- • • • • vom mobilen Router an die Maschine des Ursprungsstandorts des anfordernden nomadischen Benutzerendgeräts, die die Zugriffe in Bewegung befindlicher nomadischer Endgeräte verwaltet, eine Fernzugriff-Anforderungsmitteilung an eine zweite globale Multicast-Verbreitungsadresse zu übertragen, die an der Lokalisierungsadresse des mobilen Routers zugänglich ist; und nach dem Empfang der zweiten Adresse durch den mobilen Router, den von der zweiten Adresse ausgehenden globalen Multicast-Verbreitungsfluss zu abonnieren;

- • • • • den von der zweiten Adresse empfangenen globalen Multicast-Verbreitungsfluss in einen lokalen umgewandelten Multicast-Verbreitungsfluss umzuwandeln, der lokal auf der Ebene des mobilen IP-Netzwerks an der ersten Adresse zugänglich ist; und

- • • • • den lokalen umgewandelten Multicast-Verbreitungsfluss vom mobilen Router an das mindestens eine anfordernde nomadische Benutzerendgerät zu übertragen.

4. Verfahren nach Anspruch 3, **dadurch gekennzeichnet, dass**

- • wenn die erste Adresse eine lokale Verbreitungsadresse am Ursprungsstandort des anfordernden nomadischen Benutzerendgeräts ist, dieses außerdem darin besteht:

- • • ausgehend von der Lokalisierungsvariablen die Position der Verbindung des mobilen Routers zu unterscheiden, und abhängig von der Lokalisierung dieser Verbindung;

- • • • wenn der mobile Router mit einem zu seinem Ursprungsstandort gehörenden Netz verbunden ist,

- • • • • die Zugriffsanforderung durch Übertragung einer klassischen Zugriffsanforderungsmitteilung direkt an die erste Adresse zu übertragen; sonst;

- • • • wenn der mobile Router mit einem anderen Netz verbunden ist, das nicht zu seinem Ursprungsstandort gehört,

- • • • • vom mobilen Router an die Maschine des Ursprungsstandorts des anfordernden nomadischen Benutzerendgeräts, die die Zugriffe von in Bewegung befindlichen nomadischen Endgeräten verwaltet, eine Fernzugriff-Anforderungsmitteilung an eine zweite globale Multicast-Verbreitungsadresse zu übertragen, die an der Lokalisierungsadresse des mobilen Routers zugänglich ist; und nach dem Empfang der zweiten Adresse durch den mobilen Router, den von der zweiten Adresse ausgehenden globalen Multicast-Verbreitungsfluss zu abonnieren;

- • • • • den von der zweiten Adresse empfangenen globalen Multicast-Verbreitungsfluss in einen lokalen umgewandelten Multicast-Verbreitungsfluss umzuwandeln, der lokal auf der Ebene des mobilen IP-Netzwerks an der ersten Adresse zugänglich ist; und,

- • • • • den umgewandelten lokalen Multicast-Verbreitungsfluss vom mobilen Router an mindestens das anfordernde nomadische Benutzerendgerät zu übertragen.

5. Verfahren nach Anspruch 3 oder 4, **dadurch gekennzeichnet, dass** die vom mobilen Router übertragene Fernzugriff-Anforderungsmitteilung eine Zugriffsanforderung auf eine erweiterte Multicast-Verbreitung ist, die entweder von einer globalen Multicast-Verbreitungsanforderungsmitteilung oder von einer lokalen Multicast-Verbreitungsanforderungsmitteilung an die Ursprungsorganisation des anfordernden nomadischen Benutzerendgeräts geformt wird.

6. Verfahren nach einem der Ansprüche 1 bis 5, **dadurch gekennzeichnet, dass** für einen mobilen Router, der innerhalb und/oder außerhalb seines Ursprungsanschlussnetzwerks wirken kann, wobei dem mobilen Router durch den Ursprungsanschlussstandort eine interne Daueradresse für jede Netzverbindung dieses mobilen Routers an einem zu diesem Ursprungsanschlussnetzwerk gehörenden Standort, eine interne vorübergehende Adresse für jede Netzverbindung dieses Endgeräts an einem anderen Standort, der zu dieser Ursprungsorganisation gehört, und, durch jeden beliebigen Standort, der nicht zur Ursprungsorganisation gehört, eine externe vorübergehende Adresse für jede Netzverbindung des mobilen Routers an dem beliebigen Standort zugeteilt wird, wobei die Adressen für den mobilen Router eine Lokalisierungsreferenz bilden, wobei der Schritt, der darin besteht, die Lokalisierung des mobilen Routers gegenüber seinem Ursprungsstandort bzw. seiner Ursprungsorganisation zu unterscheiden, mindestens darin besteht:

- zur Identifikation die Lokalisierungsreferenz mit den Adressenwerten mindestens einer der Einheiten zu vergleichen, die von der Einheit der internen Daueradressen, die der Einheit der mobilen Router zuwiesen sind, die an dieses Ursprungsanschlussnetzwerk angeschlossen sind und die in diesem Ursprungsanschlussnetzwerk wirken können, und von der Einheit der internen vorübergehenden Adressen geformt werden, die dieser Einheit von mobilen Routern für jede Verbindung an einem anderen Standort zugewiesen sind, der zur Ursprungsorganisation gehört; und

- mindestens die Lokalisierungsunterscheidungsinformation des mobilen Routers zu erstellen, die entweder die Verbindung des mobilen Routers in seinem Ursprungsanschlussnetzwerk, nach Identifikation der Lokalisierungsreferenz in der Einheit der internen Daueradressen, oder die Netzverbindung des mobilen Routers an einem anderen Standort bezeichnet, der zur Ursprungsorganisation gehört, nach Identifikation der Lokalisierungsreferenz in der Einheit der internen vorübergehenden Adressen, oder auch die Netzverbindung des nomadischen Endgeräts an einem beliebigen Standort, der nicht zur Ursprungsorganisation gehört, in Abwesenheit der Lokalisierungsreferenz in der einen und anderen Einheit der internen Daueradressen oder der Einheit der internen vorübergehenden Adressen bezeichnet.

7. Verfahren nach einem der Ansprüche 5 oder 6, **dadurch gekennzeichnet, dass** der Schritt, der darin besteht, eine Zugriffsanforderung auf eine erweiterte Multicast-Verbreitung ausgehend von einer lokalen Multicast-Informationsverbreitung an die Ursprungsorganisation bzw. den Ursprungsstandort des nomadischen Endgeräts zu übertragen, wobei diese lokale Multicast-Verbreitung von einer Informationsverbreitungsquelle erzeugt wird, die an einer ersten lokalen Multicast-Informationsverbreitungsadresse an diesem Ursprungsstandort installiert ist, darin besteht:

- vom mobilen Router eine Anforderungsmitteilung einer erweiterten Multicast-Informationsverbreitung an den Ursprungsstandort zu übertragen, die mindestens die erste lokale Multicast-Informationsverbreitungsadresse und einen Identifikationscode des mobilen Routers enthält; und nach der Identifikation des mobilen Routers durch den Ursprungsstandort;

- vom Ursprungsstandort an den mobilen Router eine Zugriffsangebotsmitteilung zu übertragen, die mindestens eine zweite globale Multicast-Informationsverbreitungsadresse enthält, deren Verbreitungsquelle im Ursprungsstandort identifiziert ist; und nach dem Empfang der Zugriffsangebotsmitteilung durch den mobilen Router;

- vom mobilen Router eine Annahmemitteilung des Zugriffsangebots auf die an der zweiten globalen Multicast-Informationsverbreitungsadresse verbreiteten Informationen an den Ursprungsstandort zu übertragen; und nach dem Empfang der Zugriffsangebot-Annahmemitteilung auf der Ebene des Ursprungsstandorts,

- die zu verbreitenden Informationen von der ersten zur zweiten Verbreitungsadresse zu transferieren; und

- durch globale Multicast-Verbreitung die unter der zweiten Adresse zu verbreitenden Informationen zu übertragen, was es dem mobilen Router, der mit einem Standort verbunden ist, der nicht zum Ursprungsstandort bzw. zur Ursprungsorganisation gehört, erlaubt, an dem Standort die unter der ersten Adresse in lokaler Multicast-Verbreitung verbreiteten Informationen zu empfangen, die unter der zweiten Adresse in globaler Multicast-Verbreitung verbreitet werden.

8. Mobiler Router, der mit Überwachungs- und Übertragungsfunktionen der Zugriffsanforderungen von jedem nomadischen Benutzerendgerät ausgestattet ist, das mit einem mobilen IP-Netzwerk verbunden ist, welches vom mobilen Router verwaltet wird, wobei dieses mobile Netzwerk mindestens ein mit diesem mobilen IP-Netzwerk verbundenes nomadisches Benutzerendgerät aufweist, **dadurch gekennzeichnet, dass** er mindestens aufweist:

- Unterscheidungseinrichtungen der Art von Multicast-Verbreitung, die von jeder Zugriffsanforderung auf eine Multicast-Verbreitung angefordert wird, die vom anfordernden nomadischen Benutzerendgerät gesendet wird;

- Einrichtungen zum Ersatz, in Abhängigkeit von einer Lokalisierungsvariablen der Verbindung des mobilen Routers außerhalb seines Ursprungsstandorts bzw. seiner Ursprungsorganisation, jeder Zugriffsanforderung auf eine Multicast-Gruppenverbreitung, die für den Ursprungsstandort bestimmt ist und sich auf eine lokale Multicast-Verbreitung am Ursprungsstandort bzw. in der Ursprungsorganisation des nomadischen Endgeräts bezieht, durch eine Zugriffsanforderung auf eine erweiterte Multicast-Verbreitung, die den Zugriff auf die lokale Multicast-Verbreitung erlaubt;

- Umwandlungseinrichtungen jeder empfangenen erweiterten Multicast-Verbreitung in eine lokale umgewandelte Multicast-Verbreitung.

**9.** Mobiler Router nach Anspruch 8, **dadurch gekennzeichnet, dass** die Umwandlungseinrichtungen der empfangenen erweiterten Multicast-Verbreitung in eine lokale umgewandelte Multicast-Verbreitung Einrichtungen zum Ersatz der globalen Multicast-Verbreitungsadresse enthalten, die durch eine lokale umgewandelte Multicast-Verbreitungsadresse ersetzt wird.

**10.** Mobiler Router nach einem der Ansprüche 8 oder 9, **dadurch gekennzeichnet, dass** dieser Einrichtungen zur Übertragung und zum Empfang von IP-Mitteilungen enthält, wobei die Empfangseinrichtungen mindestens den Empfang der Lokalisierungsinformation der Zugriffsangebotsmitteilung der erweiterten Multicast-Verbreitung gewährleisten, wobei die Übertragungseinrichtungen mindestens die Übertragung der Anforderungsmitteilung einer erweiterten Multicast-Informationsverbreitung, der Zugriffsangebot-Annahmemitteilung, des umgewandelten lokalen Multicast-Verbreitungsflusses im mobilen IP-Netzwerk an mindestens das anfordernde nomadische Benutzerendgerät gewährleisten.

**11.** Programmprodukt, das auf einem Speicherträger aufgezeichnet ist und von einem Computer in Form eines Softwareagenten ausgeführt werden kann, **dadurch gekennzeichnet, dass** es mindestens ein Softwaremodul aufweist, das eingerichtet ist, um:

- • • eine Lokalisierungsunterscheidungsinformation zu empfangen;
- • • eine Zugriffsanforderung durch ein anforderndes nomadisches IP-Netzwerk-Benutzerendgerät, wenn die Lokalisierungsunterscheidungsinformation eine Verbindung eines mobilen Routers außerhalb seines Ursprungsstandorts bzw. seiner Ursprungsorganisation bezeichnet, durch eine Zugriffsanforderung auf eine erweiterte Multicast-Verbreitung zu ersetzen, die den Zugriff auf eine lokale Multicast-Verbreitung erlaubt;
- • • die Zugriffsanforderung auf die erweiterte Multicast-Verbreitung zum Ursprungsstandort zu übertragen;
- • • die erweiterte Multicast-Verbreitung zu empfangen und in eine lokale umgewandelte Multicast-Verbreitung auf der Ebene des mobilen Routers umzuwandeln; und
- • • die lokale umgewandelte Multicast-Verbreitung im mobilen IP-Netzwerk zu mindestens dem anfordernden nomadischen Benutzerendgerät zu übertragen.

**12.** Programmprodukt nach Anspruch 11, **dadurch gekennzeichnet, dass** das Umwandlungssoftwaremodul mindestens ein Ersatzmodul der globalen Multicast-Verbreitungsadresse aufweist, die durch eine lokale umgewandelte Multicast-Verbreitungsadresse ersetzt wird.

FIG.1a (Art antérieur)

**FIG.1b (Art antérieur)**

**FIG.2a**

**_FIG.2b_**

FIG.3a (Art antérieur)

FIG.3b

$$LR = P@_{xy} \quad B_{10}$$

$$B_{11}: \quad LR \in \{P@_{1i}\}_{i=1}^{i=I} ?$$

$B_{12}$:
$$LI=0$$
$$MR_x \text{ connecté à } S_1 \in 0_0$$

(+)

$B_{13}$:
$$LR \in [\{P@_{2j}\}_{j=1}^{j=J} ; \{P@_{3k}\}_{k=1}^{k=K} ; \{P@_{41}\}_{1=1}^{1=L}]$$

$B_{14}$:
$$LI=1$$
$$MR_x \text{ connecté à } S_x \in 0_0$$

(+)

$B_{15}$:
$$LI=2$$
$$MR_x \text{ connecté à } S_q \notin 0_0$$

**_FIG.3c_**

$$S_1 \{S_k\}_{k=2}^{k=N}$$
$$GR = LMD_{1i} \; T_{1jk}$$

$MR_k$ — Transmission $MR_k \longrightarrow S_1$ de $EMR(LMD_{1i})$ — $H_1$

$S_1$ — Transmission $S_1 \longrightarrow MR_k$ de $GMO(GMD_{1g})$ — $H_2$

$MR_k$ — Transmission $MR_k \longrightarrow S_1$ de $AAO(GMD_{1g})$ — $H_3$

} Transmission point à point

Transfert $ID_{1i} \longrightarrow ID_{1g}$ — $H_4$

$S_1$ {

Transmission Multicast globale $ID_{1g}$ — $H_5$

} Transmission point - multipoint

## FIG.4a

$SD, \; R_{11}$

Diffusion locale $SD \longrightarrow R_{11}$ $ID_{1i}(LMD_{1i})$ — $H_{41}$

Redirection $GR, ID_{1i} \longrightarrow ID_{1g}, GR_2$ — $H_{42}$

## FIG.4b

$T_x$

$K$

$CPU$

$I/O$

$MR_x$

$M_1$ $M_2$ $M_3$

$AAO(GMD_{1g})$

$RM(LR)$

$EMR(LMD_{1i})$

$GMO(GMD_{1g})$

$AR(LI)$

$I, J$

$S_1$ ou $MR_x$

Processus de
diffusion Multicast
étendue

Processus de
localisation

$H_{41}, H_{42}$

$B_1, B_2$

<u>**FIG.5**</u>

EP 1 825 653 B1

S₁

SD

R₁

AL₁

Arbre de diffusion
Multicast globale

Diffusion
Multicast locale

S₂

T₂

MN_A

AL₂

MR₂

S₃

T₃

AL₃

MR₃

MN_C

S₄

AL₄

MR₄

MN_B

**FIG.6a**

EP 1 825 653 B1

FIG.6b

**FIG.6c**

S₁

SD

Réseau IP Multicast

S₂

T₂

MN_A

AL₂  MR₂

R₁

AL₁

Arbre de diffusion
Multicast globale

Diffusion
Multicast locale

S₃

T₃

AL₃

MR₃

MN_C

S₄

AL₄

MR₄

MN_B

EP 1 825 653 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 0314639
- US 20030095523 A
- FR 0309873
- FR 0312688